# EUROPEAN PATENT SPECIFICATION

(11) **EP 4 176 499 B1**
(45) Date of publication and mention of the grant of the patent: **05.06.2024**
(21) Application number: 20745292.1
(22) Date of filing: 06.07.2020
(51) Int. Cl.: H02B 1/01, H02B 1/28, H02B 1/30

(54) **A MODULAR FRAME STRUCTURE OF AN ENCLOSURE FOR LOW-VOLTAGE SWITCHGEAR AND CONTROLGEAR ASSEMBLIES WITH IMPROVED DEGREE OF PROTECTION (IP CODE)**
MODULARER RAHMEN EINES NIEDERSPANNUNGSSCHALTSCHRANKES MIT ERHÖHTEM BERÜHRUNGSSCHUTZ (IP KENNZAHL)
CHÂSSIS MODULAIRE D'UNE ARMOIRE ÉLECTRIQUE BASSE TENSION AVEC DEGRÉ DE PROTECTION AMÉLIORÉ (CODE IP)

(43) Date of publication of application: 10.05.2023
(73) Proprietor: Elsteel Denmark A/S, 2990 Nivå (DK)
(72) Inventor: ALEXEEV, Peter, Katunayake 11420 (LK)
(86) International application number: PCT/IB2020/056323
(87) International publication number: WO 2022/008948

(56) References cited:
- WO-A1-94/14307
- WO-A1-2012/052969
- WO-A1-2019/016617
- BE-A5- 1 011 793
- US-A- 4 691 970

## Description

### TECHNICAL FIELD

The present invention relates to the field of low-voltage switchgear and controlgear assemblies, particularly with regard frame structure of an enclosure having improved degree of protection against solid objects and water (IP code).

### BACKGROUND ART

An enclosure for low-voltage switchgear and controlgear assemblies is usually a steel frame structure covered with doors and covers. They are used to build low-voltage switchgear and controlgear assemblies by installing electrical equipment (circuit breakers, fuses, contactors, relays, etc.) and connecting by conductors (busbars, wires and cables). Electrical enclosure manufacturers are trying to improve their products in many ways. Improvement of degree of protection (IP code) is one such aspect.

Degrees of protection (IP code) of enclosures are defined in IEC 60529. The degree of protection (IP code) is indicated by two characteristic numerals. The first characteristic numeral (numerals 0 to 6, or letter X) indicates protection against access to hazardous parts and against solid foreign objects. The second characteristic numeral (numerals 0 to 9, or letter X) indicates protection against ingress of water. The higher numeral characteristic indicates the higher level of protection. Where the characteristic numeral indicates no protection, it shall be replaced by the letter "X". For example, IP54, where "5" indicates protection against dust and "4" indicates protection against splashing water. The easiest method of increasing an IP code of an enclosure is welding. But welding method has disadvantages such as limited number of configurations (lack of modularity), lack of extension of enclosure whenever required, increased space during storage and transportation.

The invention is an improved modular frame structure of an enclosure for low-voltage switchgear and controlgear assemblies. The frame structure of this electrical enclosure differs from the prior art. It includes a set of components namely corner block, corner bar, corner bar extension block, cross bar and cross bar extension block. All these components have improved features which enable them to build an enclosure with improved degree of protection (IP code).

Core components, i.e. Corner Block, Corner Bar, Corner Bar Extension Block, Cross Bar and Cross Bar Extension Block have been improved in the invention. As described in the detailed description the new corner block with a gasket is an improvement of the corner block disclosed in International Application Number PCT/DK93/00401 (WO 94/14307). The invention disclosed in PCT/DK93/00401 can be considered as the closest prior art and is referred to as D1 in this section. In the closest prior art D1, there are three tapped holes on projections on the corner block and another tapped hole on an outer face of the corner block. Each of the four holes meets at an inside center point of the corner block. Since the four holes meet at one point, the water entering from the outer tapped hole runs through all three other holes and reaches inside the electrical enclosure. The assembling mechanism of the corner bar has been improved by removing corner bar anchor (as defined in D1) and the fixing holes corresponding to corner bar anchor. Apart from that all other components of the invention, i.e. corner bar extension block, cross bar and cross bar extension block are equipped with improved assembling mechanisms to improve the degree of ingress protection.

### TECHNICAL PROBLEM

Solid objects and water are conductive or might become conductive in some conditions. If they come inside low-voltage switchgear and controlgear they might reduce clearance and creepage distances between current carrying parts and might lead to short circuits. Short circuits might damage electrical equipment installed inside the enclosure and might lead to operation staff injuries. Hence, the degree of protection (IP code) of an enclosure is one of the most important safety characteristics of low-voltage switchgear and controlgear assemblies.

Improvement of degree of protection (IP code) of an enclosure is a challenging task. When components of the frame structure are assembled together, small gaps between edges are inevitable. Although these gaps seem to be closed or invisible foreign solid bodies and water might travel through them inside the enclosure. Electrical enclosure manufacturers have identified that it is hard to stop foreign solid bodies and water entering into the enclosures through such gaps.

### DISCLOSURE OF THE INVENTION

The invention is an improved design of components of modular frame structure of an enclosure for low-voltage switchgear and controlgear assemblies. It includes a set of components namely Corner Block, Corner Bar, Corner Bar Extension Block, Cross Bar and Cross Bar Extension Block, which are assembled together in a particular manner to build a frame of an enclosure for low-voltage switchgear and controlgear assemblies. All these components are equipped with all accessories required to assemble components together and seal gaps between them.

### ADVANTAGEOUS EFFECTS

The invention provides a modular frame structure with a stronger joint as it uses improved fastening mechanisms which require less assembly and manufacturing time. All these changes improve efficiency of the manufacturing and assembling processes, reliability and characteristics of the final product.

### BRIEF DESCRIPTION OF DRAWINGS

Drawings do not appear in their correct scale. Some components of the invention are illustrated comparatively larger or smaller than their actual appearance.
Fig. 1A and 1C illustrate perspective front and rear views of the improved corner block (10).
Fig. 1B illustrates a perspective front view of the corner block found in the prior art.
Fig. 2A illustrates a perspective front view of the corner block (10) in respect of XYZ planes.
Fig. 2B illustrates a cross sectional view of the corner block (10).
Fig. 2C illustrates a perspective bottom view of the corner block (10).
Fig. 2D illustrates a top view of the corner block (10).
Fig. 2E illustrates a top view of the corner block (10) with a gasket.
Fig. 2F illustrates a perspective front view of the corner block (10) with gaskets.
Fig. 2G illustrates a perspective front view of the corner block (10) with gaskets assembled.
Fig. 3A illustrates a perspective front view of the improved corner bar (30).
Fig. 3B illustrates the location of corner bar anchor (30).
Fig.s 4A to 4D illustrate the corner bar anchor.
Fig.s 5A to 5D illustrates the corner bar extension block.
Fig. 6A illustrates a perspective view of a cross bar.
Fig.s 6B to 6D illustrate the assembling device located at each end of the cross bar.
Fig. 6E illustrates the use of cross bar insert when assembling cross bar.
Fig.s 7A to 7E illustrate a cross bar extension block.
Fig.s 8A to 8D illustrate different ways of assembling the components.

### DETAILED DESCRIPTION OF EXEMPLARY EMBODIMENTS OF THE INVENTION

The invention is an improved design of components of a modular frame structure of an enclosure for low-voltage switchgear and controlgear assemblies.

Basically, the invention is an assembly of structural components which build up the modular frame structure of an enclosure for low-voltage switchgear and controlgear assemblies. The modular frame structure and its components are designed, developed and assembled in a particular manner which improves the degree of protection (IP code) of an enclosure.

The core components of the invention are corner block, corner bar, corner bar extension block, cross bar and cross bar extension block. All these components have been improved with different features.

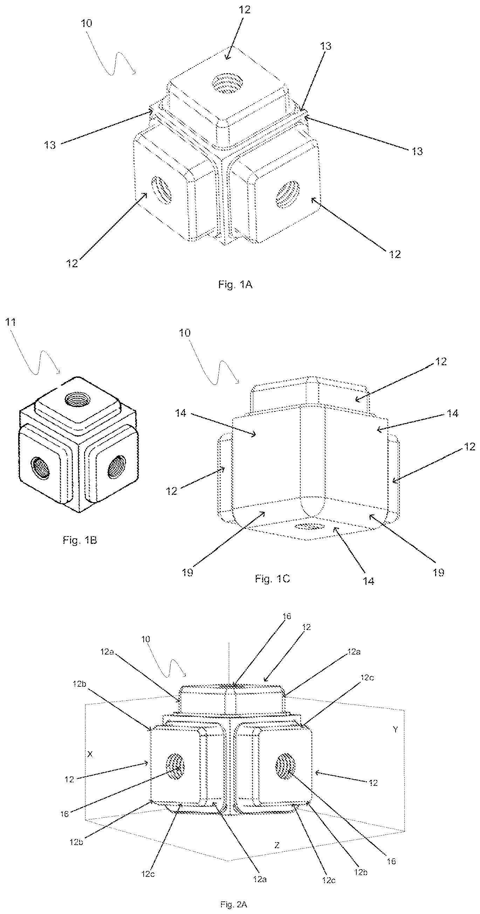

As shown in Fig. 1A, the corner block (10) is an improvement of the corner block (11) disclosed in International Application Number PCT/DK93/00401 (WO 94/14307) which can be considered as the closest prior art. The corner block (11) described in the closest prior art patent, there are three tapped holes on projections on the corner block and another tapped hole on an outer face of the corner block. Each of the four holes meets at inside center point of the corner block. Since the four holes meet at one point, the water enters from the outer tapped holes running through all three other holes and reaches inside the electrical enclosure.

As shown in Fig. 1A, the improved corner block (10) is a solid cube of hard material having three square-shaped projections (12) on three of its faces. The faces of the corner block (10) which stay internally when the modular frame structure is assembled and have a projection on it, are named as base faces (13). Each projection (12) is raised on a base face (13). As shown in Fig. 1C, the faces of the corner block (10) which stay externally when the modular frame structure is assembled and do not have a projection on it, are named as flat faces (14). The corners where two flat faces (14) of the corner block (10) meet externally are rounded corners (19).

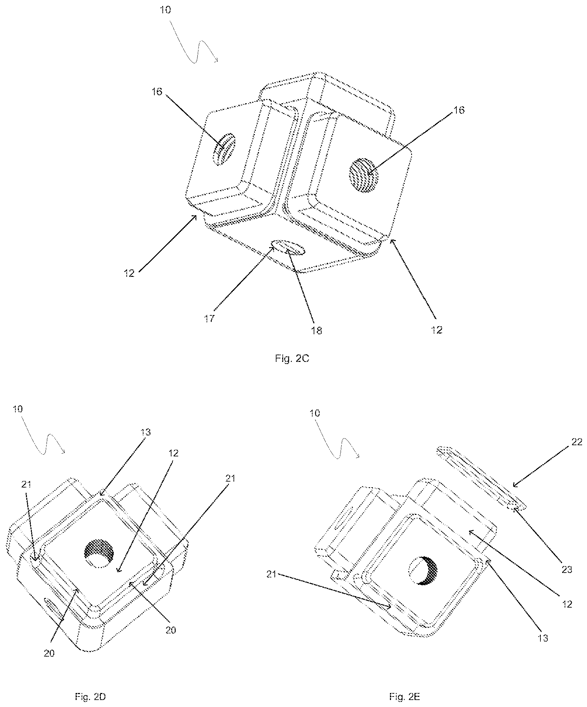

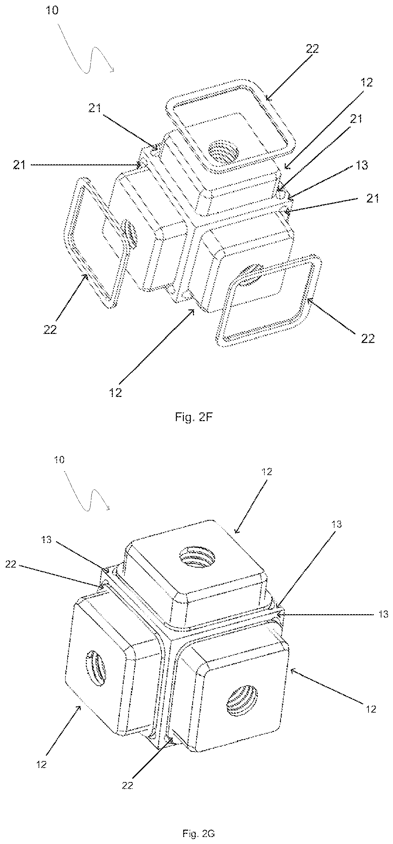

As shown in Fig. 2A, the square-shaped projections (12) are orthogonal to each other corresponding to planes X, Y and Z. Each projection (12) has rounded side edges (12a). Top surface of each projection (12) is a square with rounded corners (12b). Each edge (12c) of the square-shaped top surface of a projection (12) is tapered. There is a center hole (16) at the center of the top surface of each projection (12).

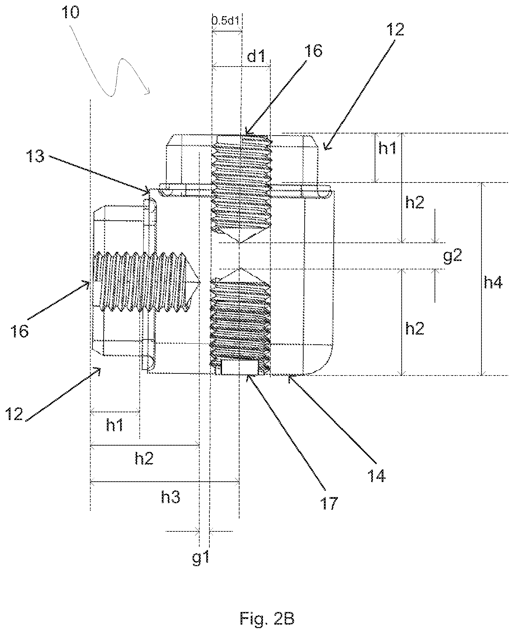

As shown in Fig. 2B, each projection (12) has a height of h1 mm from the base face (13) to top surface of the projection (12). The center hole (16) is a tapped hole having d1 mm diameter and a thread height of h2 mm running from centre of the top surface of the projection (12) towards the centre of the corner block (10). The depth of the centre hole (16), i.e. thread height h2 mm, is designed to be less than the height h3 mm from top surface of the projection (12) to the centre of the corner block (10) and the depth of the centre hole (16) is greater than h1 mm. Apart from the three centre holes (16) on the top surfaces of the projections (12), another auxiliary hole (17) having the same diameter d1 mm and the same thread height h2 mm is located at the centre of the flat face (14) corresponding to plane Z (refer Fig. 2A) and is aligned to centre hole (16) in the projection (12) on the corresponding base face (13) of the corner block (10). The width of a base face (13) or flat face (14) of the corner block (10) is h4 mm.

As further shown in Fig. 2B, the depth of the centre hole (16) always stops at distance less than h3 - 0.5d1 mm from the top surface of the projection (12). Thus, the h2 mm depth of the centre hole (16) lies in the range of h1 < h2 < h3-0.5d1 mm while keeping a gap of g1 mm between end of the centre hole (16) and the closest border of the auxiliary hole (17), so that the centre hole (16) does not sink into auxiliary hole (17). The height of a projection (12) h1 mm is determined to provide adequate thread height h2 mm to the centre hole (16), which is greater than h1 mm, so that a screw driven into a depth in the centre hole (16), is adequate to firmly assemble a frame member with stability when assembling to the corner block (10). The h1 mm height of the projection (12) is high enough to insert it in full and retain inside any of the two ends of corner bar. Furthermore, the height of projection (12) h1 mm is determined to limit the thread height of the centre hole (16) to h2 mm to allow the gap of g1 mm having adequate material strength to withstand against torque of the screw driven in the centre hole (16) avoiding any disturbance auxiliary hole (17) or other two centre holes (16). Thus, the length of the gap carries the property of g1 mm being greater than 1.5 mm where g1 = h3-h2-0.5d1 in millimeters.

When auxiliary hole (17) is considered, the thread height of it runs deeper in the corner block (10) than that of centre hole (16), i.e. greater than h3-0.5d1 mm. The height of projection (12) h1 mm is further determined in a manner where the thread height of auxiliary hole (17) and thread height of centre hole (16) which is aligned with the auxiliary hole (17), do not meet each other inside the corner block (10), and creating a gap of g2 mm between the end points of the depths of two holes (16 and 17). The gap of g2 mm has adequate material strength to withstand against torque of the two screws driven in the centre hole (16) and auxiliary hole (17) avoid creating any passage between each other or any disturbance to each other Thus, the length of the gap carries the property of g2 mm being greater than 1.5 mm where g2 = h4+h1-2h2 in millimeters.

Thus, the arrangement of three centre holes (16) and auxiliary hole (17) in the corner block (10) prevent none of the four holes reaching into any of the other holes (16 or 17) and do not make any passage to enter any substance such as water, into the electrical enclosure, especially through auxiliary hole (17). As a result, the Ingress Protection (IP) rating of the electrical enclosure is improved. In contrast, the tapped holes used to assemble corner bars to the corner block (11) in the prior art stated above, meet each other inside the corner block (11) and create a passage into the electrical enclosure through which any substance can travel inside the electrical enclosure.

As shown in Fig. 2C, the auxiliary hole (17) in the corner block (10) is closed using a set screw (18) by default and the centre holes (16) on the top surface of the projection (12) are kept opened to assemble frame members. As shown in Fig. 2D, the top square-shaped surface of the projection (12) has tapered edges (20).

As further shown in Fig. 2D, the base face (13) has a continuous groove (21) at the bottom of the projection (12) and on the two external edges of the base face (13). The depth of the groove (21) is deep enough to hold a gasket.

As shown in Fig.s 2E and 2F, a square-shaped gasket (22) with rounded corners is placed around the projection (12) and is inserted in the groove (21). The internal width of the gasket (22) is slightly greater than the width of the top surface of the projection (12). The height of the gasket (22) is not even on all four sides. Two sides of the gasket (22) which come on to the groove (21) on external edges of the base face (13) of the corner block (10), are bulged. The height of two adjoining bulged sides (23) of the gasket (22) is greater than that of the other two sides of the gasket (22) and is slightly greater than the depth of the groove (21). When the two bulged sides (23) of the gasket (22) is placed on the groove (21), the two sides without bulges rest on the base face (13). Consequently, as shown in Fig. 2G, the gasket (22) rest on each base face (13), surrounding each projection (12) with a certain height.

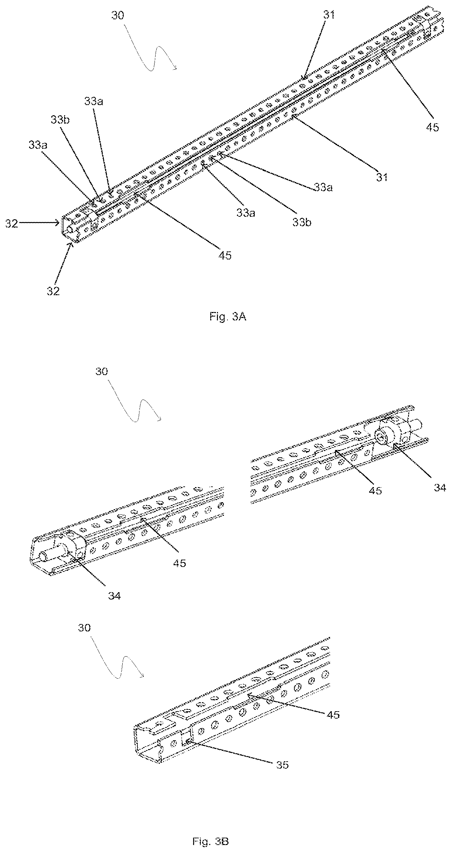

As shown in Fig. 3A, a corner bar (30) is a bar having a square-shaped profile with rounded corners. The corner bar (30) is assembled to corner block (10) in assembling the modular frame structure of the electrical enclosure. Two of the longitudinal surfaces (32) of the corner bar (30) stay externally and the other two longitudinal surfaces (31) stay internally to the modular frame structure when it is fully assembled. The two internal surfaces (31) have tapped holes (33a) and free holes (33b) located one after the other in a modular manner. The two external surfaces (32) are flat surfaces. The edge where two flat surfaces (32) meet externally is rounded. There are two openings (45) on the corner bar (30). The internal width of square-shaped profile of the corner bar is slightly greater than the width of the front surface of the projection (12) of the corner block (10) and does not exceed the width h4 mm of base face or flat face of the corner block (10). So that both surfaces, i.e. external flat face (14) of the corner block (10) and the external surface (32) of corner bar (30), stay evenly without any dips or elevations.

As shown in Fig. 3B, at the two ends of the corner bar (30) is equipped with 'corner bar anchors' (34). A slot (35) is located after the first hole from each end of the corner bar (30). The slot (35) is used to hold the corner bar anchor (34) at each end of the corner bar (30). The opening (45) is used to insert a screwdriver to fasten the corner bar anchor (34).

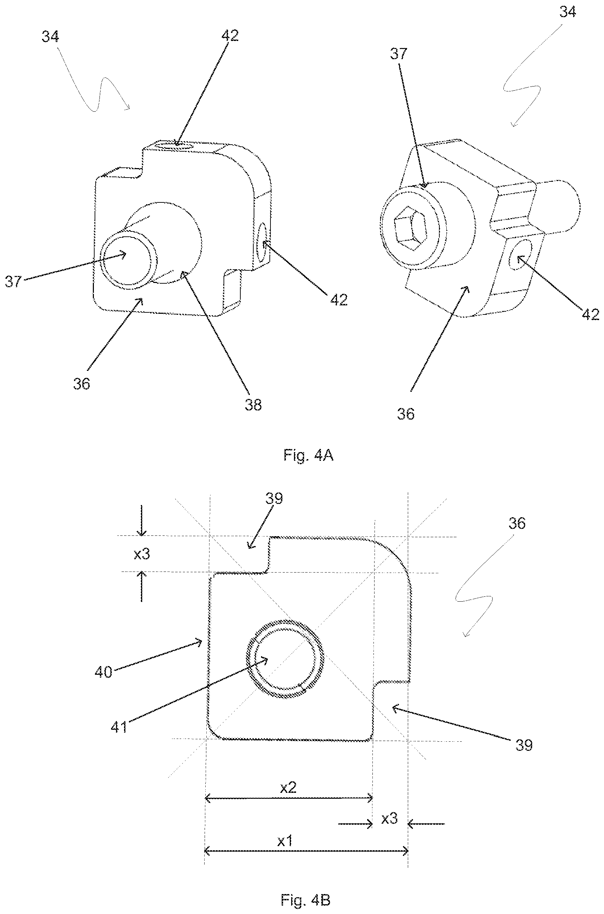

As shown in Fig. 4A, the corner bar anchor (34) is a component used to assemble one end of a corner bar (30) to a projection (12) of in the corner block (10). The corner bar anchor (34) comprises a partially square-shaped steel block (36) with a substantial thickness, a bolt (37), an O-ring (38) and two tapped holes (42).

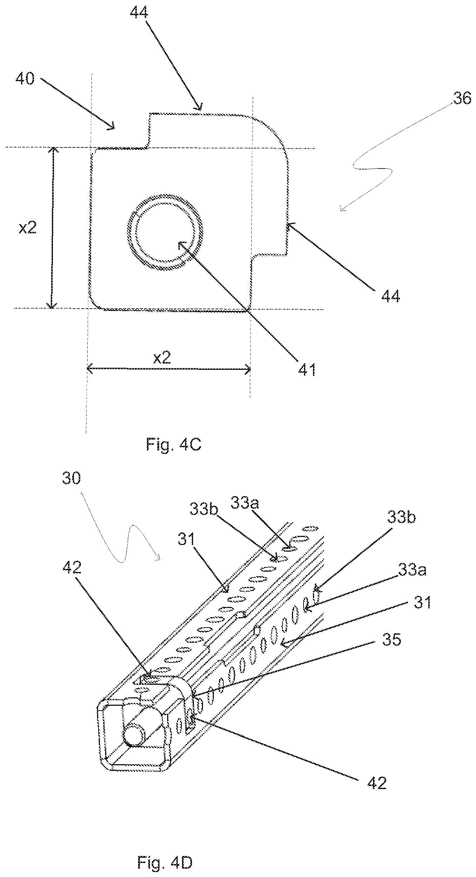

As shown in Fig.s 4B and 4C, the shape of the steel block (36) appears as if two smaller rectangular shaped portions (39) have been removed from the two diagonal corners of a square shaped first steel block (40) having a side length of x1 mm. The height and width of the rectangular shaped portions (39) are determined in a manner which creates adequate space to insert the corner bar anchor (34) into the slot (35). The height and width of the rectangular shaped portions (39) removed from the first block (40) are minimized to the extent which the corner bar anchor (34) can be inserted into the slot (35) and maximum length from the steel block (36) entangles with the cross-section of the cross bar (30). When the corner bar (30) is assembled to the corner block (10), the portion of the steel block (36) which entangles with the cross-section of the cross bar (30), moves the cross bar towards the corner block. The side length x1 mm is greater than the internal width of square-shaped profile of the corner bar and is equal to the total of the internal width of square-shaped profile of the corner bar and the thickness of the corner bar which is x3 mm. Thus, referring to Fig. 4C, the side surface (44) of the resultant block (36) is kept evenly surfaced with the two longitudinal internal surfaces (31) of the corner bar (30).

As further shown in Fig.s 4B and 4C, the resultant steel block (36) after removing the two portions (39) has two sides of each having x2 mm width, which stay inside the corner bar (30) when the steel block (36) is fully inserted into the slot (35) in the corner bar (30). The width x2 mm is always slightly less than the internal width of the square-shaped profile of the corner bar (30), which allows smooth insertion of the steel block (36) into the slot (35). This arrangement allows the steel block (36) to be inserted in to the slots (35) in the corner bar (30). The hole (41) on the steel block (36), which is meant for the bolt (37), is off-set from the center of the first steel block (40). The hole (41) is positioned on the steel block (36) centering to the center of the square-shaped profile of the corner bar (30). Thus, the hole (41) on the steel block (36) coincide with the center hole (16) on the front surface of the projection (12) on the corner block (10). The bolt (37) is retained in the steel block (36) by the O-ring (38) as shown in Fig. 4A.

As shown in Fig. 4D, two tapped holes (42) are located on two sides of the steel block (36), which are visible when it is inserted in the slot (35) on the two internal longitudinal surfaces (31) of the corner bar (30). The two holes (42) are positioned in line with the series of holes (33a and 33b) on the two internal longitudinal surfaces (31) of the corner bar (30), maintaining the same modularity with the series of holes on the two longitudinal surfaces (31) of the corner bar.

When assembling the corner bar (30) with the corner block (10), one steel block (36) is inserted to a slots (35) at one end of the corner bar (30) and two bolts (37) are inserted, facing opposite directions, from the other end of the corner bar (30); the second steel block (36) is inserted to the other slots (35) at the other end of the corner bar (30); each bolt (37) is passed through hole (41); O-ring (38) is attached to each bolt (37). The tapered projection (12) on the corner block (10) is inserted into one end of the corner bar (30) in its full height h1 mm when the corner block (10) is connected to the corner bar. Then, each bolt (37) is driven into centre hole (16) on the projection (12) on the corner block (10) by a screw driver inserted through opening (45) on the corner bar (30); the end of the corner bar (30) is pressed into the gasket (22); the gasket (22) is further pressed into the groove (21). Thus, the gasket (22) serves as an intermediate sealer between the edges of the corner bar (30) and the corner block (10). The groove (21) on each base face (14) of the corner block (10) is wide enough to accommodate two corresponding edges of the corner bar.

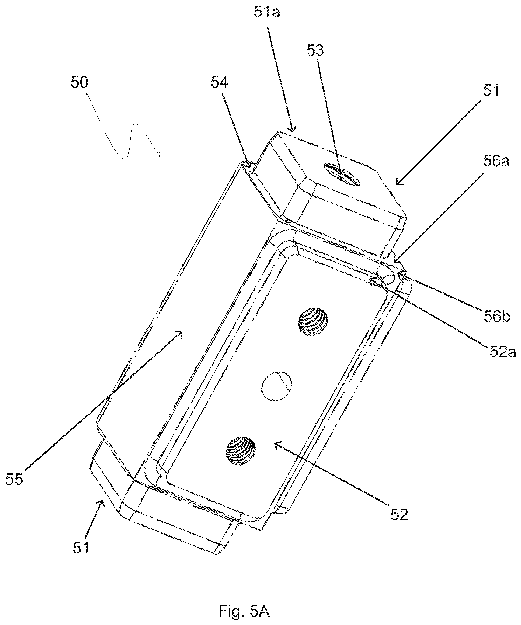

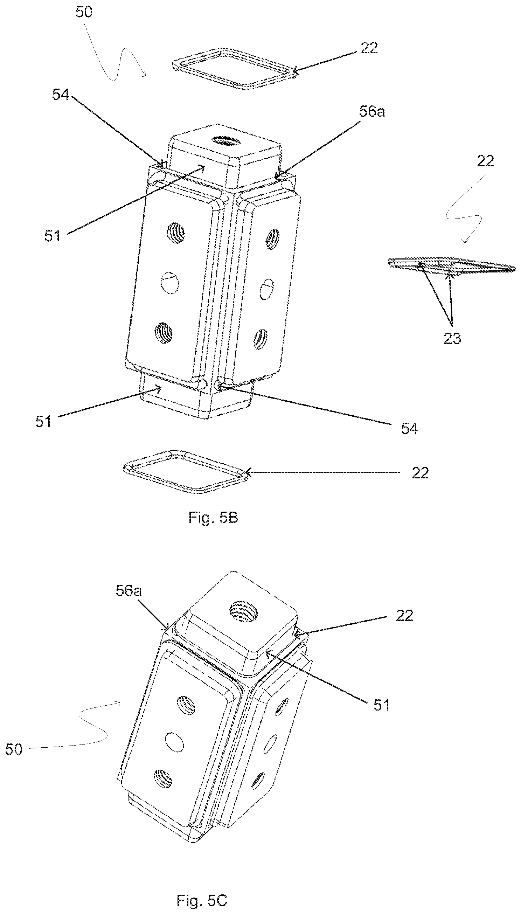

As shown in Fig. 5A, a corner bar extension block (50) is a solid block used to join two corner bars (30) and has four projections on its top, bottom and two side faces. The faces which stay externally when the modular frame structure is assembled and do not have a projection on it, are named as flat faces. The corner bar extension block (50) has two flat faces (55). The faces which stay internally when the modular frame structure is assembled and have a projection on it, are named as base faces. The corner bar extension block (50) has two square-shaped base faces (56a) on top and bottom, and two rectangular-shaped base faces (56b) on two adjoining sides. The two square-shaped projections (51) on the top and the bottom square-shaped base faces (56a) are higher than the two rectangular-shaped projections (52) on the two-adjoining rectangular-shaped side base faces (56b) of the corner bar extension block (50). The top and bottom projections (51) have the same characteristics of the projection (12) on the base face (13) of the corner block (10). The edges (51a and 52a) of the two square-shaped projections (51) and the two rectangular-shaped projections (52) are slightly tapered. Either of the top or bottom projections (51) is inserted into one end of a corner bar (30). Each of them (51) has rounded corners and a center hole (53) at the center of the front surface of the projection (51). The width of the front surface of the projections (51) is equal to the width of the front surface of the projection (12) on the corner block (10), so that the projection (51) can be inserted into an end of the corner bar (30). A continuous groove (54) which is similar to the one in the corner block (10) is located at the bottom of each projection (51) on the two external edges of the top and the bottom square-shaped base faces (56a) of the corner bar extension block (50).

As shown in Fig.s 2D and 5B, the same square-shaped gasket (22) with rounded corners is placed around the projection (51) and is inserted in the groove (54). The internal width of the gasket (22) is slightly greater than the width of the top surface of the projection (51). The height of the gasket (22) is not even on all four sides. Two sides of the gasket (22) which come on to the groove (54) on external edges of the square-shaped base faces (56a) on the corner bar extension block (50) are bulged. The height of two adjoining bulged sides (23) of the gasket (22) is greater than that of the other two sides of the gasket (22) and is slightly greater than the depth of the groove (54). When the two bulged sides (23) of the gasket (22) are placed on the groove (54), the two sides without bulges rest on the top or bottom square-shaped base face (56a). Consequently, as shown in Fig. 5C, the gasket (22) rest on top and bottom square-shaped base faces (56a), surrounding each projection (51) with a certain height.

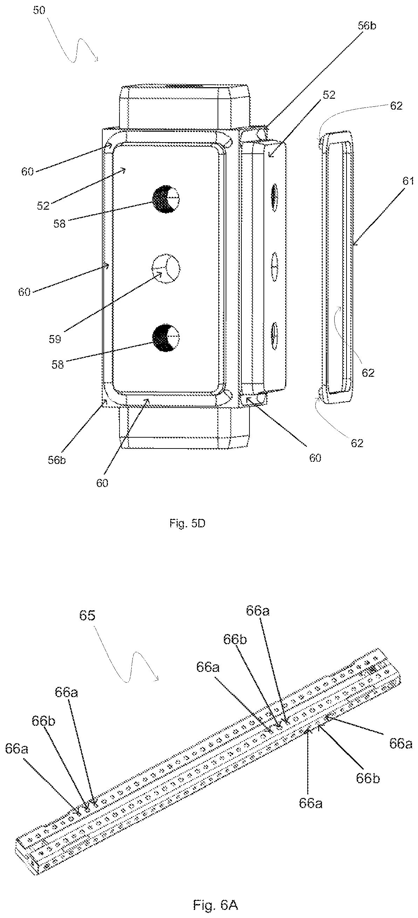

As shown in Fig. 5D the rectangular-shaped projections (52) on the two adjoining sides are used to assemble cross bars in the modular frame structure. Each of them (52) has rounded corners and three holes located in line with an equal distance to the hole at the center, on the front surface of the projection (52). The hole at the center is a free hole (59) and the two holes on the either sides of the free hole (59) are tapped holes (58). Each tapped hole (58) on the front surface of the projection (52) is placed in the middle point between the free hole (59) and the corresponding edge of the front surface of the projection (52). The height and the width of the projection (52) are equal to the inner width and height of the cross-section of a cross bar (65) which is illustrated in Fig. 6A. At the bottom of each rectangular-shaped projections (52), there is a continuous groove (60) on three external edges of the rectangular base face (56b). A rectangular-shaped gasket (61) with rounded corners is placed around the projection (52) and is inserted in the groove (60). The internal width of the gasket (61) is slightly greater than the width of the top surface of the projection (52). The height of the gasket (61) is not even on all four sides. Three sides of the gasket (61) which come on to the groove (60) on the three external edges of the rectangular base face (56b) are bulged. The height of three adjoining bulged sides (62) of the gasket (61) is greater than that of the other side of the gasket (61) and is slightly greater than the depth of the groove (60). When the three bulged sides (62) of the gasket (61) is placed on the groove (60), the side without a bulge rest on the rectangular base face (56b). Consequently, the gasket (61) rest on the rectangular-shaped base face (56b) of the corner bar extension block (50), surrounding each projection (52) with a certain height.

As shown in Fig. 6A, a cross bar (65) is bar having a rectangular-shaped profile with rounded corners and four series of holes (66a and 66b) on four of its longitudinal surfaces which stay internally when the modular frame structure is assembled. Each series of holes (66a and 66b) contains tapped holes (66a) and free holes (66b) located one after the other in modular manner. A cross bar (65) is assembled to a corner bar (30) or to another vertical or horizontal cross bar (65) as a horizontal or vertical frame member of the modular frame structure of electrical enclosure.

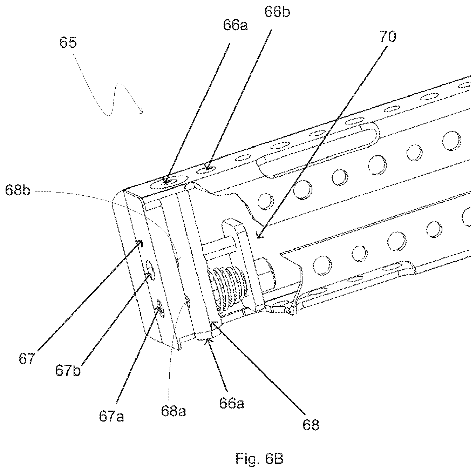

As shown in Fig. 6B, each end of cross bar (65) is equipped with a cross bar insert (67), cylindrical anchor (68) and an assembling device (70), which are used to assemble a cross bar (65) to a frame member. The cylindrical anchor (68) has two free holes (68a and 68b) on its body. The cylindrical anchor (68) is installed inside at each end of the cross bar (65) by reverting one end of the cylindrical anchor (68). The reverted end of the cylindrical anchor (68) still provides a tapped hole (66a) on it to maintain the modularity on the series of holes (66a and 66b) on that longitudinal surface. The other end of the cylindrical anchor (68) also provides a tapped hole (66a) to maintain the modularity on the series of holes (66a and 66b) on the respective longitudinal surface. The cross bar insert (67) has two free holes (67a and 67b) corresponding to the holes (68a and 68b) in the cylindrical anchor (68).

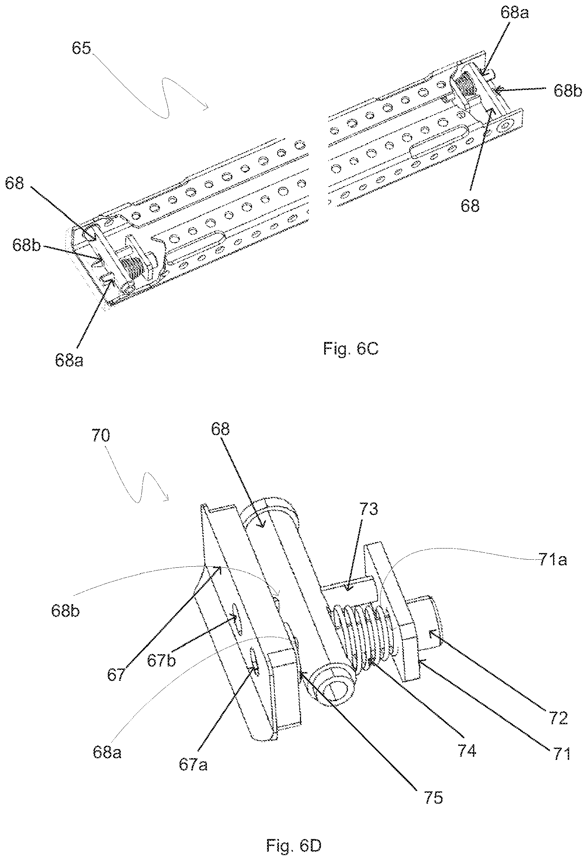

As shown in Fig. 6C, the free hole (68b) passes through the center of the cylindrical anchor (68). The other free hole (68a) is placed in the middle between the free hole (68b) and one end of the cylindrical anchor (68). Thus, the free hole (68a) on the cylindrical anchor (68) is located diagonally at each end of the cross bar (65). Similarly, as shown in Fig.s 6B and 6C, the free hole (67b) is at the center of the cross bar insert (67). The other free hole (67a) is placed in the middle between the free hole (67b) and an end of the cross bar insert (67). With reference to Fig. 6B and 6C, the free hole (67a) on the cross bar insert (67) is located diagonally at each end of the cross bar insert (67).

As further shown in Fig. 6D, the assembling device (70) is comprised of guide pin (73) with a base plate (71), bolt (72), a conical spring (74) and a retainer washer (75). The bolt (72) is inserted through the hole (71a) on the base plate (71), the conical spring (74) and the hole (68a) on the cylindrical anchor (68). The bolt (72) is retained on the cylindrical anchor (68) by a retainer washer (75) attached to the thread end of the bolt (72). While the bolt (72) is inserted through the hole (68a) on the cylindrical anchor (68), the guide pin (73) is inserted through the hole (68b) on the cylindrical anchor (68). The two free holes (67a and 67b) on the cross bar insert (67) are located coinciding to the two free holes (68a and 68b) on the cylindrical anchor (68) respectively. Thus, the assembling device (70) is freely movable through holes (68a and 68b) on the cylindrical anchor (68).

As shown in Fig.s 6C and 6D, the two bolts (72) in the assembling devices (70), are located diagonally at each end of a cross bar (65).

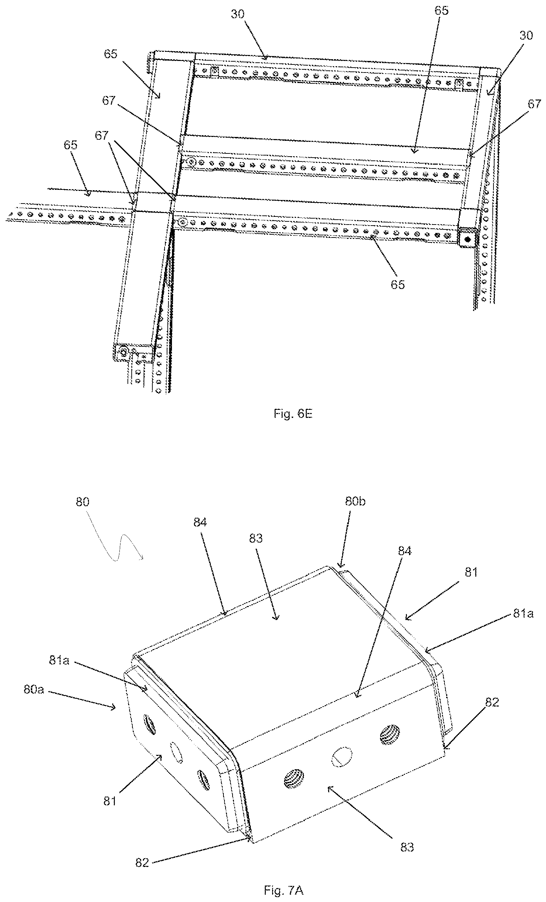

As shown in Fig. 6E, when a cross bar (65) is assembled to a corner bar (30) or an external cross bar (65), a cross bar insert (67) is placed in between the end of the cross bar (65) and the corner bar (30) or the other external cross bar (65). When a cross bar (65) is assembled to other frame members, i.e. a corner bar extension block (50), cross bar extension block (80) or an internal cross bar (65), the cross bar insert (67) is not used in between the cross bar end and such frame member. The external cross bar (65) is a cross bar (65) which can be seen from outside when the enclosure is built. The internal cross bar (65) is a cross bar (65) which cannot be seen from outside when the enclosure is built.

When assembling a cross bar (65) to a corner bar (30) or to another cross bar (65), the bolt (72) in the assembling device (70) at the end of the cross bar (65) is driven into the corresponding tapped hole (33a or 66a) on the longitudinal surface of the corner bar (30) or cross bar (65), while the guide pin (73) is inserted into corresponding free hole (33b or 66b) on the longitudinal surface of the corner bar (30) or cross bar (65), by a screw driver inserted through opening (69) on the cross bar (65) until the bolt (72) is fasten tightly .

As shown in Fig. 7A, a cross bar extension block (80) is a solid block used to join two cross bars (65) and has two side projections (81) on its left side (80a) and right side (80b) faces. The faces of the cross bar extension block (80) which has projections (81) are named as base faces (82). The faces which do not have projections on them, are named as flat faces (83). The two edges (84) of the cross bar extension block (80) which stay externally when the modular frame structure is assembled, are rounded. The cross bar extension block (80) has two rectangular-shaped base faces (82) on its left side (80a) and right side (80b) and four rectangular-shaped flat faces (83). The two rectangular-shaped projections (81) have the same characteristics of the projection (52) on the rectangular-shaped base faces (56b) of the corner bar extension block (50). The edges (81a) of the two rectangular-shaped projections (81) are slightly tapered.

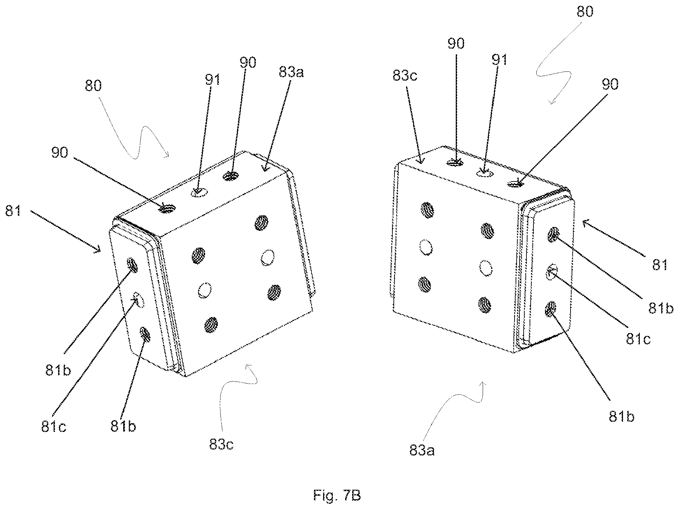

As shown in Fig. 7B, each projection (81) has rounded corners, two tapped holes (81b) and a free hole (81c) on the front surface of the projection (81). The free hole (81c) is placed at the center of the front surface of one projection (81). The two tapped holes (81b) and the free hole (81c) are located in line on the front surface of the projection (81). Each of the two tapped holes (81b) are placed on the either sides of the free hole (81c) with an equal distance to free hole (81c) at the center. Each tapped hole (81b) on the front surface of one projection (81) is placed in the middle point between the free hole (81c) and the corresponding edge of the front surface of the projection (81). Each tapped hole (81b) on one front surface of the projection (81) is located diagonally to a tapped hole (81b) on the other front surface of the projection (81) on the opposite side of the cross bar extension block (80). Each of the top and bottom flat surfaces (83a and 83c) has a free hole (91) at the center of the flat surface (83a or 83c) and two tapped holes (90). The two tapped holes (90) and the free hole (91) are located in line on the top and bottom flat surfaces (83a and 83c). Each of the two tapped holes (90) are placed on the either sides of the free hole (91) with an equal distance to the free hole (91) at the center. Each tapped hole (90) on the top and bottom flat surfaces (83a and 83c) is placed in the middle point between the free hole (91) and the corresponding edge of the flat surface (83a and 83c). Each tapped hole (90) on one flat surface (83a or 83c) is located diagonally to a tapped hole (90) on the other opposite flat surface (83c or 83a) of the cross bar extension block (80). The height and the width of the front surface of the projection (81) is equal to the internal height and the width of the cross-section of the cross bar (65), so that the projection (81) can be inserted into an end of the cross bar (65).

The arrangement of free holes at the center and tapped holes diagonally on the cross bar extension block (80), cross bar insert (67) and cylindrical anchor (70) at each end of cross bar (65), improves the stability of the modular frame structure. In other words, with reference to Fig.s 6D and 7B, the free holes (67a and 68a) on the cross bar insert (67) and cylindrical anchor (68) are located diagonally at each end; free holes (67b and 68b) are located at the center of the cross bar insert (67) and cylindrical anchor (68) respectively; tapped holes (81b) diagonally and free holes (81c) at the center on the front surface of opposite projection (81) and on the top and bottom flat surfaces (83a and 83c) of the cross bar extension block (80).

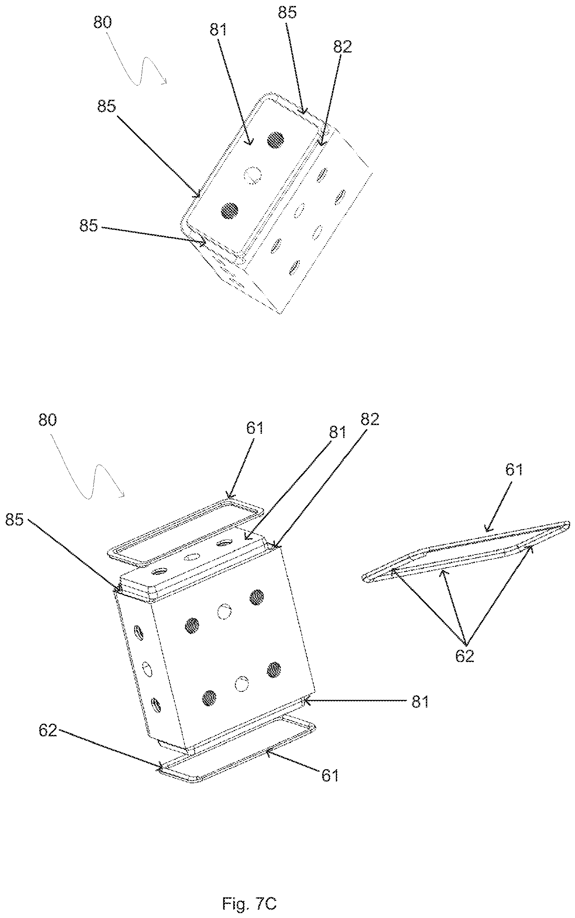

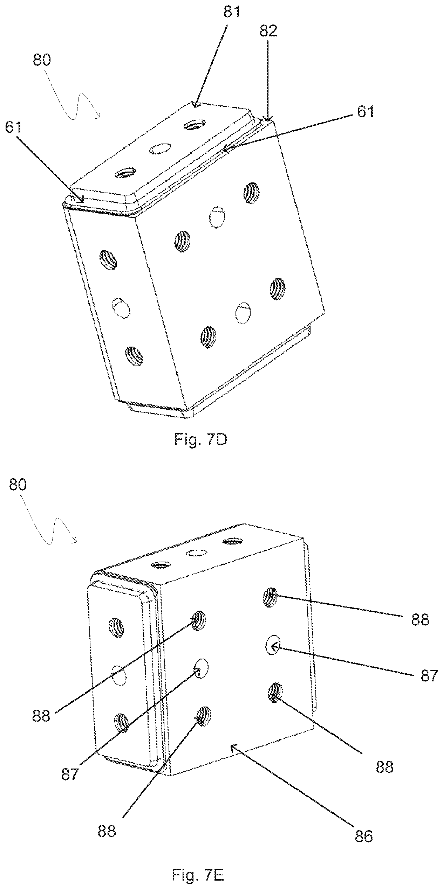

As shown in Fig. 7C, a continuous groove (85) which is similar to the groove (54) in the corner bar extension block (50) is located at the bottom of each projection (81) on three external edges of the base face (82) of the cross bar extension block (80). The same rectangular-shaped gasket (61) with rounded corners, placed surrounding the projection (52) on the corner bar extension block (50), is placed around the projection (81) and is inserted in the groove (85). The internal height and width of the gasket (61) is slightly greater than the height and the width of the top surface of the projection (81). The height of the gasket (61) is not even on all four sides. Three sides of the gasket (61) which come on to the groove (85) on edges of the rectangular-shaped base faces (82) on the cross bar extension block (80) are bulged. The height of the three adjoining bulged sides (62) of the gasket (61) is greater than that of the other side of the gasket (61) and is slightly greater than the depth of the groove (85). When the three bulged sides (62) of the gasket (61) is placed on the groove (85), the other side without a bulge rests on the base face (82). Consequently, as shown in Fig. 7D, the gasket (61) rests on the base faces (82), surrounding the projection (81) with a certain height.

As further shown in Fig. 7E, the internal flat surface (86) has two free holes (87) and four tapped holes (88) which are used to assemble cross bars (65). Two tapped holes (88) and a free hole (87) are located vertically in line (with reference to Fig. 7E) with an equal distance to the free hole (87) at the center of that line. Each tapped hole (88) is placed in the middle point between the free hole (87) and the corresponding edge of the f the internal flat surface (86). The holes (87 and 88) are also arranged in three horizontal rows to be able to select a matching configuration of a free hole (87) and a tapped hole (88) depending on the orientation of the guide pin (73) and the bolt (72) of the assembling device (70) at each end of the cross bar (65). The distance between a tapped hole (88) in top or bottom row and a corresponding free hole (87) in the middle row is equal to the distance between the free hole (68a) and the free hole (68b) on the cylindrical anchor (68) at the end of a cross bar (65). The bolt (72) and the guide pin (73), of the assembling device (70) at one end of the cross bar (65), are inserted into the corresponding tapped hole (88) and the free hole (87) when assembling a cross bar (65) to the internal flat surface (86) of the cross bar extension block (80). Thus, two cross bars (65) can be assembled to the internal flat surface (86) of the cross bar extension block (80).

With reference to Fig.s 5D, 6B, 6C, 6D, 7B and 7E the linear distance between a free hole (59, 81c or 87) and an adjoining respective tapped hole (58, 81b or 88) on the corner bar extension block (50) or cross bar extension block (80), is equal to the distance between the two free holes (68a and 68b) on the cylindrical anchor (68) at the end of a cross bar (65) or to the distance between the two free holes (67a and 67b) on the cross bar insert (67). Furthermore, the two tapped holes (58, 81b or 88) on either sides of corresponding free hole (59, 81c or 87) on the corner bar extension block (50) or cross bar extension block (80) which allows to assemble a cross bar (65) to a corner bar extension block (50) or cross bar extension block (80) irrespective of the diagonal placement of the bolt (72) of the assembling device (70) at each end of the cross bar (65).

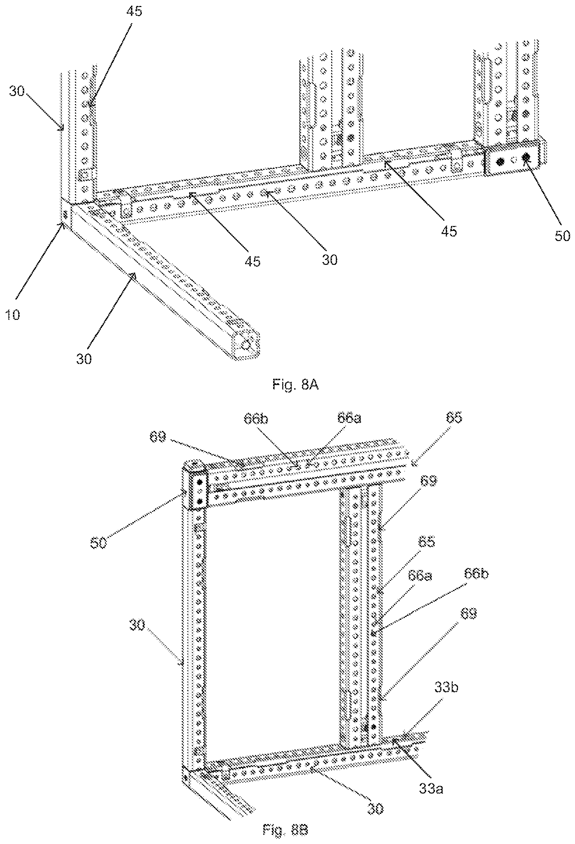

As shown in Fig. 8A, when a corner block (10) is assembled to corner bar (30) the tapered projection (12) on the corner block (10) is inserted into one end of the corner bar (30) in its full height and the bolt (37) is driven into centre hole (16) on the projection (12) on the corner block (10) by a screw driver inserted through opening (45) on the corner bar (30). When assembling a corner bar extension block (50) to a corner bar (30), one of the tapered projections (51) is inserted into the end of the corner bar (30) in its full height and then the bolt (37) in the corner bar anchor (34) is driven into centre hole (53) on the projection (51) on the corner bar extension block (50) by a screw driver inserted through opening (45) on the corner bar (30), until the gasket (22) is pressed into the groove (54) on the square-shaped base face (56a). The other projection (51) of the corner bar extension block (50) is inserted into one end of another corner bar (30) and assembled them in the similar manner.

As shown in Fig. 8B, when assembling a cross bar (65) to a corner bar (30) or to another cross bar (65), the bolt (72) in the assembling device (70) at the end of the cross bar (65) is driven into the corresponding tapped hole (33a or 66a) on the longitudinal surface of the corner bar (30) or cross bar (65), while the guide pin (73) is inserted into the corresponding free hole (33b or 66b) on the longitudinal surface of the corner bar (30) or cross bar (65), by a screw driver inserted through opening (69) on the cross bar (65) being assembled.

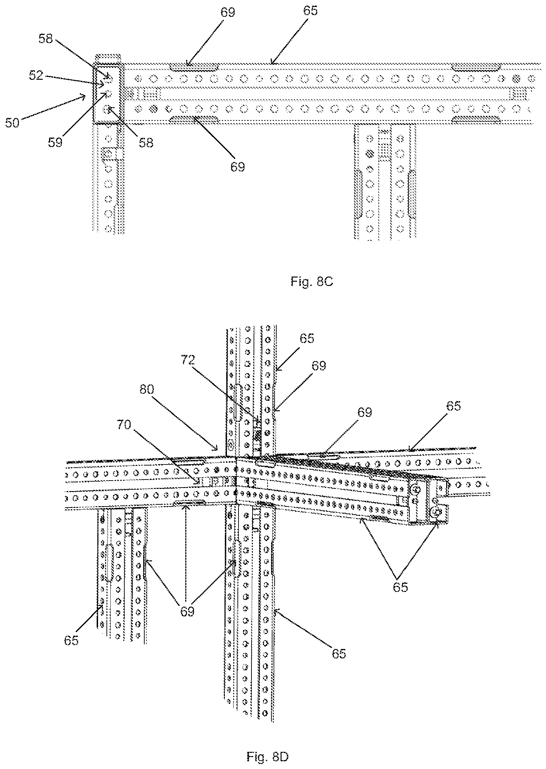

As shown in Fig. 8B and 8C and reference to 5D and 6D, when assembling a cross bar (65) to a corner bar extension block (50), the tapered rectangular projection (52) of the corner bar extension block (50) is inserted into the end of the cross bar (65) in its full height; the bolt (72) in the assembling device (70) at the end of the cross bar (65) is driven into the either of the corresponding tapped hole (58) on the projection (52) while the guide pin (73) is inserted in to the free hole (59) on the projection (52) on the corner bar extension block (50), by a screw driver inserted through opening (69) on the cross bar (65), until the gasket (61) is pressed into the groove (60) on the rectangular-shaped base face (56b). Similarly, another cross bar (65) can be assembled to the other projection (52) of the corner bar extension block (50).

As shown in Fig. 8D, when assembling a cross bar extension block (80) to a cross bar (65) to extend the length of the first cross bar (65), the tapered projections (81) of the cross bar extension block (80), is inserted into the end of the cross bar (65) in its full height; the bolt (72) in the assembling device (70) at the end of the cross bar (65) is driven into the corresponding tapped hole (81b) on the projection (81) while the guide pin (73) is inserted in to the free hole (81c) on the projection (81) on the cross bar extension block (80), by a screw driver inserted through opening (69) on the cross bar (65), until the gasket (61) is pressed into the groove (85) on the rectangular-shaped base face (82). Similarly, another cross bar (65) is assembled to the other projection (81) of the corner bar extension block (80).

As shown in Fig.s 8D and 7B, when assembling a cross bar (65) to a cross bar extension block (80) using its flat surfaces (83a and 83c), the bolt (72) in the assembling device (70) at the end of the cross bar (65) is driven into either of the corresponding tapped hole (90) while the guide pin (73) is inserted in to the free hole (91) on the flat surface (83a or 83c) of the cross bar extension block (80), by a screw driver inserted through opening (69) on the cross bar (65), until the cross bar (65) becomes complete contact with the cross bar extension block (80).

As shown in Fig.s 8D and 7E, when assembling one or two cross bars to internal flat surface (86) of the cross bar extension block (80), either end of the cross bar (65) can be assembled as there are two sets of tapped holes (88) and a free hole (87), to select according to the design requirement of the modular frame structure. Then, the bolt (72) in the assembling device (70) at the end of the cross bar (65) is driven into a selected tapped hole (88) while the guide pin (73) is inserted in to the selected free hole (87) on the internal flat surface (86) of the cross bar extension block (80), by a screw driver inserted through opening (69) on the cross bar (65) being assembled, until the cross bar (65) becomes complete contact with the internal flat surface (86) of the cross bar extension block (80). Similarly, another cross bar (65) can be assembled to the same internal flat surface (86) of the cross bar extension block (80) according to the design requirement of the modular frame structure.

## Claims

1. A modular frame structure adapted for an enclosure of a low-voltage switchgear and controlgear assembly, the modular frame structure being built up by a plurality of corner blocks, corner bars, corner bar extension blocks, cross bars and cross bar extension blocks assembled together and comprising:
a. a solid cubical corner block (10) comprising:
i. three square-shaped orthogonal projections (12), with tapered top edges (20), on three of its base faces, each of which having a height of h1 mm from base face to top surface of the projection (12), a tapped center hole (16) having a diameter of d1 mm at the center of the top surface of the projection (12) and a thread height of h2 mm running from centre of the top surface of the projection (12) towards the centre of the corner block (10) where h2 mm thread height is less than the height of h3 mm from top surface of the projection (12) to the centre of the corner block (10) and the depth of the centre hole (16) is greater than h1 mm, where the depth of the centre hole (16) always stops at distance less than h3 - 0.5d1 mm from the top surface of the projection (12) and lies in the range of h1 < h2 < h3-0.5d1 mm while keeping a gap of g1 mm between end of the centre hole (16) and the closest border of the auxiliary hole (17), avoiding the centre hole (16) sinking into auxiliary hole (17) and three flat faces without any projections on them, the flat faces (14) of the corner block being configured to stay externally when the modular frame structure is assembled;
ii. an auxiliary hole (17) closed with a set screw (18), having the d1 mm diameter and the h2 mm thread height located at the centre of one flat face (14) and aligned to centre hole (16) in the projection (12) on the corresponding base face (13) of the corner block (10) where the width of a base face (13) or flat face (14) of the corner block (10) is h4 mm and the h2 mm thread height of it runs deeper in the corner block (10) than that of centre hole (16), whereby the h1 mm height of projection (12) is further determined in a manner where the h2 mm thread height of auxiliary hole (17) and the h2 mm thread height of centre hole (16), both aligned, do not meet each other inside the corner block (10), creating a gap of g2 mm between the end points of the both depths of two holes (16 and 17) where the g2 mm gap having adequate material strength to withstand against torque of two screws driven in the centre hole (16) and auxiliary hole (17) avoid creating any passage between each other or any disturbance to each other;
iii. a base face (13) having a continuous groove (21) at the bottom of the projection (12) and on the two external edges of the base face (13), where the depth of the groove (21) is deep enough to hold a gasket; and
iv. a square-shaped gasket (22) with rounded corners placed around the projection (12) and inserted in the groove (21), having an internal width slightly greater than the width of the top surface of the projection (12) and a height of the gasket (22) not even on all four sides of which two sides of the gasket (22) which come on to the groove (21) on external edges of the corner block (10) are bulged and the height of two adjoining bulged sides (23) of the gasket (22) is greater than that of the other two sides of the gasket (22) and is slightly greater than the depth of the groove (21);
b. a corner bar (30) having a square-shaped profile with rounded corners and internal longitudinal surfaces with series of tapped holes (33a) and free holes (33b) located one after the other, comprising:
i. an internal width of such profile being slightly greater than the width of the front surface of the projection (12) of the corner block (10), not exceeding the h4 mm width of the base face or flat face of the corner block (10); and
ii. two corner bar anchors (34) each comprising a partially square-shaped steel block (36) with a substantial thickness, a hole (41) and two tapped holes (42) on the thickness; a bolt (37); and an O-ring (38), whereby the two corner bar anchors (34) placed at the two ends of the corner bar (30) in a slot (35) located after the first hole from each end of the corner bar (30);
c. a cross bar (65) having a rectangular-shaped profile with rounded corners and internal longitudinal surfaces with series of tapped holes (66a) and free holes (66b) located one after the other, comprising at each end:
i. a cylindrical anchor (68) having two free holes (68a and 68b) on its body, installed inside at each end of the cross bar (65) by reverting one end of the cylindrical anchor (68);
ii. an assembling device (70) comprising a guide pin (73) with a base plate (71), a bolt (72), a conical spring (74) and a retainer washer (75) whereby the bolt (72) is inserted through the hole (71a) on the base plate (71), the conical spring (74) and the hole (68a) on the cylindrical anchor (68) and is retained on the cylindrical anchor (68) by a retainer washer (75) attached to the thread end of the bolt (72) while the guide pin (73) is inserted through the hole (68b) on the cylindrical anchor (68); and
iii. a cross bar insert (67) having a free holes (67b) located at the center and another free hole (67a) in the middle between the free hole (67b) and an end of the cross bar insert (67), corresponding to the free holes (68b and 68a) on the cylindrical anchor (68);
d. a corner bar extension block (50) for joining plurality of corner bars (30) and cross bars (65) comprising:
i. two square-shaped projections (51) on its top and bottom base faces (56a) to assemble corner bars and two rectangular-shaped projections (52) on two adjoining side base faces (56b) to assemble cross bars, of which the edges (51a and 52a) of the front surface of the square-shaped projections (51) and the rectangular-shaped projections (52) are slightly tapered and having rounded corners;
ii. a center hole (53) at the center of the front surface of each top and bottom projections (51) of which the width of the front surface is equal to the width of the front surface of the projection (12) on the corner block (10);
iii. two tapped holes (58) and a free hole (59) located in line with an equal distance to the free hole (59) at the center on the front surface of the rectangular-shaped projection (52);
iv. a continuous groove (54) located at the bottom of each projection (51) on the two external edges of the top and the bottom square-shaped base faces (56a);
v. a continuous groove (60) located at the bottom of each projections (52) on three external edges of the rectangular base face (56b);
vi. a square-shaped gasket (22) with rounded corners placed around the projection (51) and inserted in the groove (54) where the internal width of the gasket (22) is slightly greater than the width of the top surface of the projection (51) and the height of the gasket (22) is not even on all four sides of which two sides of the gasket (22) which come on to the groove (54) on external edges of the square-shaped base faces (56a) are bulged and the height of two adjoining bulged sides (23) of the gasket (22) is greater than that of the other two sides of the gasket (22) and is slightly greater than the depth of the groove (54) enabling the two sides without bulges rest on the top or bottom square-shaped base face (56a); and
vii. a rectangular-shaped gasket (61) with rounded corners placed around the projection (52) and inserted in the groove (60) where the internal width of the gasket (61) is slightly greater than the width of the top surface of the projection (52) and the height of the gasket (61) not even on all four sides of which three sides of the gasket (61) which come on to the groove (60) on the three external edges of the rectangular base face (56b) are bulged and the height of three adjoining bulged sides (62) of the gasket (61) is greater than that of the other side of the gasket (61) and is slightly greater than the depth of the groove (60) enabling the side without a bulge rests on rectangular-shaped base face (56b); and
e. a cross bar extension block (80) for joining plurality of cross bars (65) comprising:
i. two rectangular shaped-side projections (81) having slightly tapered top edges (81a) and rounded corners, on the left side (80a) and right side (80b) base faces (82);
ii. two tapped holes (81b) and a free hole (81c) located in line with an equal distance to the free hole (81c) at the centre on the front surface of the two projections (81) where each tapped hole (81b) is placed in the middle point between the free hole (81c) and the corresponding edge of the front surface of the projections (81) and tapped holes (81b) on the two front surfaces of the projections (81) are located in a diagonal manner;
iii. two tapped holes (90) and a free hole (91) located in line with an equal distance to the free hole (91) at the center of the flat surface (83a or 83c) where each tapped hole (90) is placed in the middle point between the free hole (91) and the corresponding edge of the flat surface (83a and 83c) and the tapped holes (90) on the two flat surfaces (83a and 83c) are located in a diagonal manner;
iv. two free holes (87) and four tapped holes (88) arranged in three horizontal rows to be able to select a matching configuration of a free hole (87) and a tapped hole (88) depending on the orientation of the guide pin (73) and the bolt (72) of the assembling device (70) at each end of the cross bar (65);
v. a continuous groove (85) located at the bottom of each projection (81) on three external edges of the base face (82); and
vi. a rectangular-shaped gasket (61) with rounded corners placed around the projection (81) and inserted in the groove (85), of which the internal height and width (61) is slightly greater than the height and the width of the top surface of the projection (81) and the height of the gasket (61) is not even on all four sides of which three sides which come on to the groove (85) on edges of the rectangular-shaped base faces (82), are bulged and the height of the three adjoining bulged sides (62) of the gasket (61) is greater than that of the other side of the gasket (61) and is slightly greater than the depth of the groove (85).

2. The modular frame structure adapted for enclosure of a low-voltage switchgear and controlgear assembly of Claim 1, wherein each projection (12) of the corner block (10) has rounded side edges (12a), rounded corners (12b) on the top surface, tapered edges (12c) on the top surface and a centre hole (16) located at the center of the top surface.

3. The modular frame structure adapted for enclosure of a low-voltage switchgear and controlgear assembly of Claim 1, wherein the height of the projection (12) h1 mm, of the corner block (10), is determined to provide adequate thread height h2 mm to the centre hole (16), which is greater than h1, so that a screw driven into a depth in the centre hole (16), is adequate to firmly assemble a frame member with stability when assembling to the corner block (10).

4. The modular frame structure adapted for enclosure of a low-voltage switchgear and controlgear assembly of Claims 1 and 3, wherein the height of the projection (12), of the on the corner block (10), is high enough to insert it in full and retain inside the corner bar and the height of projection (12) h1 mm is determined to limit the thread height of the centre hole (16) to h2 mm to allow the gap of g1 mm having adequate material strength to withstand against torque of the screw driven in the centre hole (16) avoiding any disturbance auxiliary hole (17) or other two centre holes (16) thereby the length of the gap carries the property of g1 being greater than 1.5 mm where g1 = h3-h2-0.5d1 mm.

5. The modular frame structure adapted for enclosure of a low-voltage switchgear and controlgear assembly of Claim 1, wherein the thread height of the auxiliary hole (17), of the corner block (10), is greater than h3-0.5d1 mm.

6. The modular frame structure adapted for enclosure of a low-voltage switchgear and controlgear assembly of Claim 1, wherein the length of the gap between the end points of the depths of the center hole (16) and the auxiliary hole (17), of the corner block (10), carries the property of g2 being greater than 1.5 mm where g2 = h4+h1-2h2 in millimeters.

7. The modular frame structure adapted for enclosure of a low-voltage switchgear and controlgear assembly of Claim 1, wherein the arrangement of three centre holes (16) and auxiliary hole (17) in the corner block (10) prevent none of the four holes reaching into any of the other holes (16 or 17) or making any passage to enter any substance into the electrical enclosure.

8. The modular frame structure adapted for enclosure of a low-voltage switchgear and controlgear assembly of Claim 1, wherein the opening (45) in the corner bar is configured to be used to insert a screwdriver to fasten the corner bar anchor (34).

9. The modular frame structure adapted for enclosure of a low-voltage switchgear and controlgear assembly of Claim 1, wherein the shape of the steel block (36) appears as if two smaller rectangular shaped portions (39) have been removed from the two diagonal corners of a square shaped first steel block (40) having a side length of x1 mm.

10. The modular frame structure adapted for enclosure of a low-voltage switchgear and controlgear assembly of Claims 1 and 9, wherein the height and width of the rectangular shaped portions (39) are determined in a manner which creates adequate space to insert the corner bar anchor (34) into the slot (35).

11. The modular frame structure adapted for enclosure of a low-voltage switchgear and controlgear assembly of Claims 1 and 9, wherein the height and width of the rectangular shaped portions (39) removed from the first block (40) are minimized to the extent which the corner bar anchor (34) can be inserted into the slot (35) and maximum length from the steel block (36) entangles with the cross-section of the cross bar (30).

12. The modular frame structure adapted for enclosure of a low-voltage switchgear and controlgear assembly of Claim 1 and 9, wherein the portion of the steel block (36) which entangles with the cross-section of the cross bar (30) moves the cross bar towards the corner block when assembling the corner bar (30) to the corner block (10).

13. The modular frame structure adapted for enclosure of a low-voltage switchgear and controlgear assembly of Claims 1 and 9, wherein the x1 mm side length, of the steel block (36), is greater than the internal width of square-shaped profile of the corner bar and is equal to the total of the internal width of square-shaped profile of the corner bar and the thickness of the corner bar which is x3 mm.

14. The modular frame structure adapted for enclosure of a low-voltage switchgear and controlgear assembly of Claims 1 and 9, wherein the side surface (44) of the resultant steel block (36) is kept evenly surfaced with the two longitudinal internal surfaces (31) of the corner bar (30).

15. The modular frame structure adapted for enclosure of a low-voltage switchgear and controlgear assembly of Claims 1 and 9, wherein the resultant steel block (36) after removing the two portions (39) has two sides of each having a width of x2 mm, which stay inside the corner bar (30) when the steel block (36) is fully inserted into the slot (35) in the corner bar (30) where the x2 mm width is always slightly less than the internal width of the square-shaped profile of the corner bar (30), allowing the steel block (36) to be inserted in to the slots (35) in the corner bar (30).

16. The modular frame structure adapted for enclosure of a low-voltage switchgear and controlgear assembly of Claims 1 and 9, wherein the hole (41) on the steel block (36), meant for the bolt (37), is off-set from the center of the first steel block (40) and is positioned on the steel block (36) centering to the center of the square-shaped profile of the corner bar (30), coinciding with the center hole (16) on the front surface of the projection (12) on the corner block (10).

17. The modular frame structure adapted for enclosure of a low-voltage switchgear and controlgear assembly of Claims 1 and 9, wherein the bolt (37) is retained in the steel block (36) by the O-ring (38).

18. The modular frame structure adapted for enclosure of a low-voltage switchgear and controlgear assembly of Claims 1 and 9, wherein the two tapped holes (42) are located on two sides of the steel block (36), visible when it is inserted in the slot (35) on the two internal longitudinal surfaces (31) of the corner bar (30) and are positioned in line with the series of holes (33a and 33b) on the two internal longitudinal surfaces (31) of the corner bar (30).

19. The modular frame structure adapted for enclosure of a low-voltage switchgear and controlgear assembly of Claim 1, wherein the height of the two square-shaped projections (51) on the top and bottom base faces (56a) of the corner bar extension block (50) are higher than the two rectangular-shaped projections (52) on two adjoining side base faces (56b) of the corner bar extension block (50).

20. The modular frame structure adapted for enclosure of a low-voltage switchgear and controlgear assembly of Claim 1, wherein each tapped hole (58) on the front surface of the projection (52) is placed in the middle point between the free hole (59) and the corresponding edge of the front surface of the projection (52).

21. The modular frame structure adapted for enclosure of a low-voltage switchgear and controlgear assembly of Claim 1, wherein the height and the width of the projection (52) of the corner bar extension block (50) are equal to the inner width and height of the cross-section of a cross bar (65).

22. The modular frame structure adapted for enclosure of a low-voltage switchgear and controlgear assembly of Claim 1, wherein the reverted end and the other end of the cylindrical anchor (68), of the cross bar (65), provides two tapped holes (66a) on the respective internal longitudinal surfaces to maintain the modularity on the series of holes (66a and 66b).

23. The modular frame structure adapted for enclosure of a low-voltage switchgear and controlgear assembly of Claim 1, wherein the free hole (68a) on the cylindrical anchor (68), passes through the center of the cylindrical anchor (68) and the other free hole (68a) is placed in the middle between the free hole (68b) and one end of the cylindrical anchor (68) thereby the free hole (68a) is located diagonally at each end of the cross bar (65).

24. The modular frame structure adapted for enclosure of a low-voltage switchgear and controlgear assembly of Claim 1, wherein the two free holes (67a and 67b) on the cross bar insert (67) are located coinciding to the two free holes (68a and 68b) on the cylindrical anchor (68) respectively, thereby the assembling device (70) at each end of the cross bar (65) is freely movable through holes (68a and 68b) on the cylindrical anchor (68).

25. The modular frame structure adapted for enclosure of a low-voltage switchgear and controlgear assembly of Claim 1, wherein two bolts (72) in the assembling devices (70), are located diagonally at each end of a cross bar (65).

26. The modular frame structure adapted for enclosure of a low-voltage switchgear and controlgear assembly of Claim 1, wherein the height and the width of the front surface of the projection (81) on the cross bar extension block, is equal to the internal height and the width of the cross-section of the cross bar (65) enabling the projection (81) to be inserted into an end of the cross bar (65).

27. The modular frame structure adapted for enclosure of a low-voltage switchgear and controlgear assembly of Claim 1, wherein the two tapped holes (88) and a free hole (87) are placed vertically in line with an equal distance to the free hole (87) at the center of that line, of the internal flat surface (86) of the cross bar extension block (80), where each tapped hole (88) is placed in the middle point between the free hole (87) and the corresponding edge of the internal flat surface (86) and each tapped hole (88) is located diagonally to corresponding tapped hole (88).

28. The modular frame structure adapted for enclosure of a low-voltage switchgear and controlgear assembly of Claim 1, wherein the distance between a tapped hole (88) in top or bottom row and a corresponding free hole (87) in the middle row of the cross bar extension block, is equal to the distance between the free hole (68a) and the free hole (68b) on the cylindrical anchor (68) at the end of a cross bar (65).

29. The modular frame structure adapted for enclosure of a low-voltage switchgear and controlgear assembly of Claims 1 and 28, the bolt (72) and the guide pin (73), of the assembling device (70) at each end of the cross bar (65), are inserted into the corresponding tapped hole (88) and free hole (87) when assembling a cross bar (65) to the internal flat surface (86) of the cross bar extension block (80) thereby two cross bars (65) can be assembled to the internal flat surface (86) of the cross bar extension block (80).

30. The modular frame structure adapted for enclosure of a low-voltage switchgear and controlgear assembly of Claim 1, wherein the linear distance between a free hole (59, 81c or 87) and a respective adjoining tapped hole (58, 81b or 88) on the corner bar extension block (50) or cross bar extension block (80), is equal to the distance between the two free holes (68a and 68b) on the cylindrical anchor (68) at the end of a cross bar (65) or to the distance between the two free holes (67a and 67b) on the cross bar insert (67).

31. The modular frame structure adapted for enclosure of a low-voltage switchgear and controlgear assembly of Claim 1, wherein the two tapped holes on either sides of a free hole on a particular surface of the corner bar extension block (50) or cross bar extension block (80) allow to assemble a cross bar (65) to a corner bar extension block (50) or cross bar extension block (80) irrespective of the diagonal placement of the bolt (72) of the assembling device (70) at each end of the cross bar (65).

32. A method for assembling the components to build a modular frame structure according to Claim 1, comprising the steps of:
a. Assembling a corner bar (30) with a corner block (10):
i. Preparation of corner bar anchors: one steel block (36) is inserted to a slots (35) at one end of the corner bar (30) and two bolts (37) are inserted, facing opposite directions, from the other end of the corner bar (30); the second steel block (36) is inserted to the other slots (35) at the other end of the corner bar (30); each bolt (37) is passed through hole (41); O-ring (38) is attached to each bolt (37);
ii. the tapered projection (12) on the corner block (10) is inserted into one end of the corner bar (30) in its full height and the bolt (37) is driven into centre hole (16) on the projection (12) on the corner block (10) by a screw driver inserted through opening (45) on the corner bar (30), until the gasket (22) is pressed into the groove (21) on the square-shaped base face (14);
b. Assembling a cross bar (65) to a corner bar (30) or an external/internal cross bar (65):
i. a cross bar insert (67) is placed in between the end of the cross bar (65) and the corner bar (30) or the external cross bar (65). When a cross bar (65) is assembled to other frame members, i.e. a corner bar extension block (50), cross bar extension block (80) or an internal cross bar (65), the cross bar insert (67) is not used in between the cross bar end and such frame member.
ii. the bolt (72) in the assembling device (70) at the end of the cross bar (65) is driven into the corresponding tapped hole (33a or 66a) on the longitudinal surface of the corner bar (30) or cross bar (65), while the guide pin (73) is inserted in to another corresponding free hole (33b or 66b) on the longitudinal surface of the corner bar (30) or cross bar (65), by a screw driver inserted through opening (69) on the crossbar (65) until the bolt (72) is fasten tightly .
c. Assembling a corner bar extension block (50) to a corner bar (30): one of the tapered projections (51) is inserted into the end of the corner bar (30) in its full height and then the bolt (37) in the corner bar anchor (34) is driven into centre hole (53) on the projection (51) on the corner bar extension block (50) by a screw driver inserted through opening (45) on the corner bar (30), until the gasket (22) is pressed into the groove (54) on the square-shaped base face (56a). The other projection (51) of the corner bar extension block (50) is inserted in to one end of another corner bar (30) and assembled them in a similar manner;
d. Assembling a corner bar extension block (50) to a cross bar (65): the tapered rectangular projection (52) is inserted into the end of the cross bar (65) in its full height; the bolt (72) in the assembling device (70) at the end of the cross bar (65) is driven into either of the corresponding the tapped hole (58) on the projection (52) while the guide pin (73) is inserted in to the free hole (59) on the projection (52) on the corner bar extension block (50), by a screw driver inserted through opening (69) on the cross bar (65), until the gasket (61) is pressed into the groove (60) on the rectangular-shaped base face (56b);
e. Assembling a cross bar extension block (80) to a cross bar (65): the tapered projections (81) of the cross bar extension block (80), is inserted into the end of the cross bar (65) in its full height; the bolt (72) in the assembling device (70) at the end of the cross bar (65) is driven into the tapped hole (81b) on the projection (81) while the guide pin (73) is inserted in to the free hole (81c) on the projection (81) on the cross bar extension block (80), by a screw driver inserted through opening (69) on the cross bar (65), until the gasket (61) is pressed into the groove (85) on the rectangular-shaped base face (82);
f. Assembling a cross bar (65) to a cross bar extension block (80) using its flat surfaces (83a and 83c): the bolt (72) in the assembling device (70) at the end of the cross bar (65) is driven into either of the corresponding tapped hole (90) while the guide pin (73) is inserted in to the free hole (91) on the flat surface (83a or 83c) of the cross bar extension block (80), by a screw driver inserted through opening (69) on the cross bar (65), until the cross bar (65) becomes complete contact with the cross bar extension block (80);
g. Assembling one or two cross bars to internal flat surface (86) of the cross bar extension block (80): the bolt (72) in the assembling device (70) at the end of the cross bar (65) is driven into a selected tapped hole (88) while the guide pin (73) is inserted in to the selected free hole (87) on the internal flat surface (86) of the cross bar extension block (80), by a screw driver inserted through opening (69) on the cross bar (65), until the cross bar (65) becomes complete contact with the flat surface (86) of the cross bar extension block (80). Similarly, another cross bar (65) can be assembled to the same flat surface (86) of the cross bar extension block (80) according to the design requirement of the modular frame structure.

## Patentansprüche

1. Eine modulare Rahmenstruktur, die für die Einhausung einer Niederspannungs-Schaltgeräte- und Steuergerätebaugruppe angepasst ist, wobei die modulare Rahmenstruktur aus einer Vielzahl zusammengebauter Eckblöcke, Eckstangen, Eckstangen-Verlängerungsblöcke, Querstangen und Querstangen-Verlängerungsblöcke aufgebaut ist und bestehend aus:
a) einen massiven kubischen Eckblock (10), umfassend:
i) drei quadratisch geformte orthogonale Vorsprünge (12) mit konischen Oberkanten (20) auf drei seiner Grundflächen, von denen jeder eine Höhe von h1 mm von der Grundfläche bis zur oberen Fläche des Vorsprungs (12) aufweist, eine gezapfte Mitte Loch (16) mit einem Durchmesser von d1 mm in der Mitte der oberen Fläche des Vorsprungs (12) und einer Gewindehöhe von h2 mm, das von der Mitte der oberen Fläche des Vorsprungs (12) zur Mitte des Eckblocks verläuft (10) wobei die Gewindehöhe h2 mm kleiner ist als die Höhe h3 mm von der Oberseite des Vorsprungs (12) bis zur Mitte des Eckblocks (10) und die Tiefe des Mittellochs (16) größer als h1 mm ist, wobei die Tiefe des Mittellochs (16) immer bei einem Abstand von weniger als h3 - 0,5d1 mm von der oberen Fläche des Vorsprungs (12) endet und im Bereich von h1 < h2 < h3-0,5d1 mm liegt, während a beibehalten wird Abstand von g1 mm zwischen dem Ende des Mittellochs (16) und dem nächstgelegenen Rand des Hilfslochs (17), um zu vermeiden, dass das Mittelloch (16) in das Hilfsloch (17) einsinkt, und drei flache Flächen ohne Vorsprünge darauf, die die flachen Flächen (14) des Eckblocks sind so konfiguriert, dass sie beim Zusammenbau der modularen Rahmenstruktur außen bleiben;
ii) ein mit einer Stellschraube (18) verschlossenes Hilfsloch (17) mit einem Durchmesser von d1 mm und einer Gewindehöhe von h2 mm, das sich in der Mitte einer flachen Fläche (14) befindet und mit dem Mittelloch (16) im Vorsprung (12) ausgerichtet ist) auf der entsprechenden Grundfläche (13) des Eckblocks (10), wobei die Breite einer Grundfläche (13) oder flachen Fläche (14) des Eckblocks (10) h4 mm und die Gewindehöhe davon h2 mm beträgt verläuft tiefer im Eckblock (10) als die des Mittellochs (16), wobei die Höhe h1 mm des Vorsprungs (12) weiterhin in der Weise bestimmt wird, dass die Gewindehöhe h2 mm des Hilfslochs (17) und die Gewindehöhe h2 mm Gewindehöhe des Mittellochs (16), beide ausgerichtet, treffen sich nicht innerhalb des Eckblocks (10), wodurch ein Spalt von g2 mm zwischen den Endpunkten der beiden Tiefen von zwei Löchern (16 und 17) entsteht, wo die g2 mm-Spalt mit ausreichender Materialstärke, um dem Drehmoment von zwei Schrauben standzuhalten, die in das Mittelloch (16) und das Hilfsloch (17) eingedreht werden. Vermeiden Sie die Entstehung von Durchgängen untereinander oder gegenseitige Störungen;
iii) eine Grundfläche (13) mit einer durchgehenden Nut (21) an der Unterseite des Vorsprungs (12) und an den beiden Außenkanten der Grundfläche (13), wobei die Tiefe der Nut (21) groß genug ist, um zu halten eine Dichtung; Und
iv) eine quadratische Dichtung (22) mit abgerundeten Ecken, die um den Vorsprung (12) herum angeordnet und in die Nut (21) eingesetzt ist und eine Innenbreite aufweist, die etwas größer als die Breite der oberen Fläche des Vorsprungs (12) ist, und eine Höhe von die Dichtung (22) nicht auf allen vier Seiten eben ist, wobei zwei Seiten der Dichtung (22), die an der Nut (21) an den Außenkanten des Eckblocks (10) anliegen, gewölbt sind und die Höhe von zwei angrenzenden gewölbten Seiten beträgt (23) der Dichtung (22) ist größer als die der anderen beiden Seiten der Dichtung (22) und ist etwas größer als die Tiefe der Nut (21);
b) eine Eckstange (30) mit einem quadratischen Profil mit abgerundeten Ecken und inneren Längsflächen mit einer Reihe von hintereinander angeordneten Gewindelöchern (33a) und freien Löchern (33b), umfassend:
i) eine Innenbreite dieses Profils ist etwas größer als die Breite der Vorderfläche des Vorsprungs (12) des Eckblocks (10) und darf die Breite von h4 mm der Basisfläche oder flachen Seite des Eckblocks (10) nicht überschreiten. ; Und
ii) zwei Eckstangenanker (34), die jeweils einen teilweise quadratischen Stahlblock (36) mit einer beträchtlichen Dicke, einem Loch (41) und zwei Gewindelöchern (42) in der Dicke umfassen; ein Bolzen (37); und einen O-Ring (38), wodurch die beiden Eckstangenanker (34) an den beiden Enden der Eckstange (30) in einem Schlitz (35) platziert werden, der sich nach dem ersten Loch an jedem Ende der Eckstange (30) befindet );
c) eine Querstange (65) mit einem rechteckigen Profil mit abgerundeten Ecken und inneren Längsflächen mit einer Reihe von hintereinander angeordneten Gewindelöchern (66a) und freien Löchern (66b), die an jedem Ende Folgendes umfasst:
i) einen zylindrischen Anker (68) mit zwei freien Löchern (68a und 68b) an seinem Körper, der im inneren an jedem Ende der Querstange (65) installiert wird, indem ein Ende des zylindrischen Ankers (68) umgedreht wird;
ii) eine Montagevorrichtung (70), bestehend aus einem Führungsstift (73) mit einer Grundplatte (71), einem Bolzen (72), einer konischen Feder (74) und einer Sicherungsscheibe (75), durch die der Bolzen (72) eingeführt wird Loch (71a) an der Grundplatte (71), die konische Feder (74) und das Loch (68a) am zylindrischen Anker (68) und wird am zylindrischen Anker (68) durch eine daran befestigte Sicherungsscheibe (75) gehalten das Gewindeende des Bolzens (72), während der Führungsstift (73) durch das Loch (68b) am zylindrischen Anker (68) eingeführt wird; Und
iii) einen Querstangeneinsatz (67) mit einem freien Loch (67b) in der Mitte und einem weiteren freien Loch (67a) in der Mitte zwischen dem freien Loch (67b) und einem Ende des Querstangeneinsatzes (67), entsprechend dem freie Löcher (68b und 68a) am zylindrischen Anker (68);
d) einen Eckstangen-Verlängerungsblock (50) zum Verbinden mehrerer Eckstangen (30) und Querstangen (65), umfassend:
i) zwei quadratisch geformte Vorsprünge (51) an seinen oberen und unteren Grundflächen (56a) zum Zusammenbau von Eckstäben und zwei rechteckig geformte Vorsprünge (52) an zwei angrenzenden seitlichen Grundflächen (56b) zum Zusammenbau von Querstäben, deren Kanten ( 51a und 52a) der Vorderfläche der quadratischen Vorsprünge (51) und der rechteckigen Vorsprünge (52) sind leicht verjüngt und haben abgerundete Ecken;
ii) ein Mittelloch (53) in der Mitte der Vorderfläche jedes oberen und unteren Vorsprungs (51), dessen Breite der Vorderfläche gleich der Breite der Vorderfläche des Vorsprungs (12) am Eckblock ist (10);
iii) zwei Gewindelöcher (58) und ein freies Loch (59), das in einer Linie mit gleichem Abstand zum freien Loch (59) in der Mitte auf der Vorderfläche des rechteckigen Vorsprungs (52) angeordnet ist;
iv) eine durchgehende Nut (54), die sich an der Unterseite jedes Vorsprungs (51) an den beiden Außenkanten der oberen und unteren quadratischen Basisflächen (56a) befindet;
v) eine durchgehende Nut (60), die sich am Boden jedes Vorsprungs (52) an drei Außenkanten der rechteckigen Basisfläche (56b) befindet;
vi) eine quadratische Dichtung (22) mit abgerundeten Ecken, die um den Vorsprung (51) gelegt und in die Nut (54) eingesetzt wird, wobei die Innenbreite der Dichtung (22) etwas größer ist als die Breite der oberen Fläche des Vorsprungs ( 51) und die Höhe der Dichtung (22) ist nicht auf allen vier Seiten gleichmäßig, wobei zwei Seiten der Dichtung (22), die an der Nut (54) an Außenkanten der quadratischen Basisflächen (56a) anliegen, gewölbt sind und die Höhe zweier angrenzender gewölbter Seiten (23) der Dichtung (22) größer ist als die der beiden anderen Seiten der Dichtung (22) und geringfügig größer ist als die Tiefe der die beiden ermöglichenden Nut (54). Seiten ohne Ausbuchtungen ruhen auf der oberen oder unteren quadratischen Grundfläche (56a); Und
vii) eine rechteckig geformte Dichtung (61) mit abgerundeten Ecken, die um den Vorsprung (52) gelegt und in die Nut (60) eingesetzt wird, wobei die Innenbreite der Dichtung (61) etwas größer ist als die Breite der oberen Fläche des Vorsprungs ( 52) und die Höhe der Dichtung (61) nicht gleichmäßig auf allen vier Seiten, wovon drei Seiten der Dichtung (61), die an der Nut (60) an den drei Außenkanten der rechteckigen Basisfläche (56b) anliegen, liegen gewölbt und die Höhe von drei angrenzenden gewölbten Seiten (62) der Dichtung (61) ist größer als die der anderen Seite der Dichtung (61) und ist etwas größer als die Tiefe der Nut (60), die die Seite ohne a ermöglicht Ausbuchtung ruht auf rechteckiger Grundfläche (56b); Und
e) einen Querstangenverlängerungsblock (80) zum Verbinden mehrerer Querstangen (65), umfassend:
i) zwei rechteckig geformte Seitenvorsprünge (81) mit leicht verjüngten Oberkanten (81a) und abgerundeten Ecken an den Basisflächen (82) der linken Seite (80a) und der rechten Seite (80b);
ii) zwei Gewindelöcher (81b) und ein freies Loch (81c), das in einer Linie mit gleichem Abstand zum freien Loch (81c) in der Mitte auf der Vorderfläche der beiden Vorsprünge (81) angeordnet ist, wo jedes Gewindeloch (81b) platziert ist in der Mitte zwischen dem freien Loch (81c) und der entsprechenden Kante der Vorderfläche der Vorsprünge (81) sind Gewindelöcher (81b) auf den beiden Vorderflächen der Vorsprünge (81) diagonal angeordnet;
iii) zwei Gewindelöcher (90) und ein freies Loch (91), das in einer Linie mit gleichem Abstand zum freien Loch (91) in der Mitte der flachen Oberfläche (83a oder 83c) angeordnet ist, wo jedes Gewindeloch (90) platziert ist der Mittelpunkt zwischen dem freien Loch (91) und der entsprechenden Kante der ebenen Fläche (83a und 83c) und die Gewindelöcher (90) auf den beiden ebenen Flächen (83a und 83c) diagonal angeordnet sind;
iv) zwei Freilöcher (87) und vier Gewindelöcher (88), die in drei horizontalen Reihen angeordnet sind, um je nach Ausrichtung des Führungsstifts (73) eine passende Konfiguration aus einem Freiloch (87) und einem Gewindeloch (88) auswählen zu können ) und den Bolzen (72) der Montagevorrichtung (70) an jedem Ende der Querstange (65);
v) eine durchgehende Nut (85), die sich am Boden jedes Vorsprungs (81) an drei Außenkanten der Basisfläche (82) befindet; Und
vi) eine rechteckig geformte Dichtung (61) mit abgerundeten Ecken, die um den Vorsprung (81) herum angeordnet und in die Nut (85) eingesetzt ist, deren Innenhöhe und -breite (61) geringfügig größer ist als die Höhe und die Breite der oberen Fläche des Vorsprungs (81) und die Höhe der Dichtung (61) nicht auf allen vier Seiten gleichmäßig ist, wobei drei Seiten, die an Kanten der rechteckigen Grundflächen (82) an die Nut (85) angrenzen, ausgebeult sind und die Höhe der drei angrenzenden ausgebauchten Seiten (62) der Dichtung (61) größer ist als die der anderen Seite der Dichtung (61) und geringfügig größer als die Tiefe der Nut (85).

2. Die modulare Rahmenstruktur, die zum Einschließen einer Niederspannungs-Schaltgeräte- und Steuergeräteanordnung geeignet ist, nach Anspruch 1, wobei jeder Vorsprung (12) des Eckblocks (10) abgerundete Seitenkanten (12a) und abgerundete Ecken (12b) aufweist Oberseite, sich verjüngende Kanten (12c) auf der Oberseite und ein Mittelloch (16) in der Mitte der Oberseite.

3. Die modulare Rahmenstruktur, die für die Einhausung einer Niederspannungs-Schaltgeräte- und Steuergerätebaugruppe angepasst ist, nach Anspruch 1, wobei die Höhe des Vorsprungs (12) h1 mm des Eckblocks (10) so bestimmt ist, dass eine ausreichende Gewindehöhe h2 bereitgestellt wird mm zum Mittelloch (16), was größer als h1 ist, so dass eine Schraube, die tief in das Mittelloch (16) eingedreht wird, ausreicht, um ein Rahmenelement fest und stabil zu montieren, wenn es am Eckblock (10) montiert wird..

4. Modulare Rahmenstruktur zur Einhausung einer Niederspannungsschaltanlage nach Anspruch 1 und 3, wobei die Höhe des Vorsprungs (12) am Eckblock (10) hoch genug ist, um ihn einzufügen vollständig in der Eckstange verbleiben und die Höhe des Vorsprungs (12) h1 mm beträgt, um die Gewindehöhe des Mittellochs (16) auf h2 mm zu begrenzen, damit der Spalt von g1 mm eine ausreichende Materialstärke aufweist, um dem Drehmoment standzuhalten der Schraube, die in das Mittelloch (16) eingeschraubt wird, wobei jede Störung des Hilfslochs (17) oder der anderen beiden Mittellöcher (16) vermieden wird, wodurch die Länge des Spalts die Eigenschaft hat, dass g1 größer als 1,5 mm ist, wobei g1 = h3-h2- 0,5d1 mm.

5. Die modulare Rahmenstruktur, die zum Gehäuse einer Niederspannungs-Schaltgeräte- und Steuergerätebaugruppe geeignet ist, nach Anspruch 1, wobei die Gewindehöhe des Hilfslochs (17) des Eckblocks (10) größer als h3-0,5d1 mm ist.

6. Die modulare Rahmenstruktur, die für die Einhausung einer Niederspannungs-Schaltgeräte- und Steuergeräteanordnung geeignet ist, nach Anspruch 1, wobei die Länge des Spalts zwischen den Endpunkten der Tiefen des Mittellochs (16) und des Hilfslochs (17) des Eckblocks (10) hat die Eigenschaft, dass g2 größer als 1,5 mm ist, wobei g2 = h4+h1-2h2 in Millimetern.

7. Die modulare Rahmenstruktur, die für die Einhausung einer Niederspannungs-Schaltgeräte- und Steuergeräteanordnung geeignet ist, nach Anspruch 1, wobei die Anordnung von drei Mittellöchern (16) und Hilfslöchern (17) im Eckblock (10) keines der vier verhindert Löcher, die in eines der anderen Löcher (16 oder 17) reichen oder einen Durchgang ermöglichen, durch den Substanzen in das Elektrogehäuse gelangen können.

8. Die modulare Rahmenstruktur, die für die Einhausung einer Niederspannungs-Schaltgeräte- und Steuergerätebaugruppe geeignet ist, nach Anspruch 1, wobei die Öffnung (45) in der Eckschiene so konfiguriert ist, dass sie zum Einführen eines Schraubendrehers zum Befestigen des Eckschienenankers (34) verwendet werden kann.

9. Die modulare Rahmenstruktur, die für die Einhausung einer Niederspannungs-Schaltgeräte- und Steuergeräteanordnung geeignet ist, nach Anspruch 1, wobei die Form des Stahlblocks (36) so aussieht, als ob zwei kleinere rechteckige Abschnitte (39) aus den beiden Diagonalen entfernt worden wären Ecken eines quadratisch geformten ersten Stahlblocks (40) mit einer Seitenlänge von x1 mm.

10. Die modulare Rahmenstruktur, die zum Gehäuse einer Niederspannungs-Schaltgeräte- und Steuergeräteanordnung geeignet ist, nach Anspruch 1 und 9, wobei die Höhe und Breite der rechteckigen Abschnitte (39) so bestimmt sind, dass ausreichend Platz zum Einsetzen der Ecke entsteht Stangenanker (34) in den Schlitz (35) einführen.

11. Die modulare Rahmenstruktur, die für die Umschließung einer Niederspannungs-Schaltgeräte- und Steuergeräteanordnung geeignet ist, nach den Ansprüchen 1 und 9, wobei die Höhe und Breite der rechteckig geformten Abschnitte (39), die vom ersten Block (40) entfernt sind, auf ein Minimum reduziert sind wobei der Eckstabanker (34) in den Schlitz (35) einführbar ist und sich in maximaler Länge aus dem Stahlblock (36) mit dem Querschnitt des Querstabes (30) verzahnt.

12. Die modulare Rahmenstruktur, die für die Einhausung einer Niederspannungs-Schaltgeräte- und Steuergeräteanordnung geeignet ist, nach Anspruch 1 und 9, wobei der Abschnitt des Stahlblocks (36), der mit dem Querschnitt der Querstange (30) verzahnt ist, diese bewegt Richten Sie beim Zusammenbau der Eckschiene (30) mit dem Eckblock (10) die Querstange in Richtung Eckblock aus.

13. Die modulare Rahmenstruktur, die zum Gehäuse einer Niederspannungs-Schaltgeräte- und Steuergerätebaugruppe geeignet ist, nach den Ansprüchen 1 und 9, wobei die Seitenlänge x 1 mm des Stahlblocks (36) größer ist als die Innenbreite des quadratischen Profils des Eckstabes und ist gleich der Summe aus der Innenbreite des quadratischen Profils des Eckstabes und der Dicke des Eckstabes, die x3 mm beträgt.

14. Die modulare Rahmenstruktur, die für die Einhausung einer Niederspannungs-Schaltgeräte- und Steuergeräteanordnung geeignet ist, nach den Ansprüchen 1 und 9, wobei die Seitenfläche (44) des resultierenden Stahlblocks (36) eine gleichmäßige Oberfläche mit den beiden Längsinnenflächen aufweist ( 31) des Eckstabes (30).

15. Die modulare Rahmenstruktur, die für die Einhausung einer Niederspannungs-Schaltgeräte- und Steuergeräteanordnung geeignet ist, nach den Ansprüchen 1 und 9, wobei der resultierende Stahlblock (36) nach dem Entfernen der beiden Abschnitte (39) zwei Seiten aufweist, von denen jede eine Breite von x2 hat mm, die innerhalb der Eckstange (30) bleiben, wenn der Stahlblock (36) vollständig in den Schlitz (35) in der Eckstange (30) eingeführt ist, wobei die x2-mm-Breite immer etwas geringer ist als die Innenbreite des Quadrats -förmiges Profil der Eckstange (30), das das Einsetzen des Stahlblocks (36) in die Schlitze (35) der Eckstange (30) ermöglicht.

16. Die modulare Rahmenstruktur, die für die Einhausung einer Niederspannungs-Schalt- und Steuergerätebaugruppe geeignet ist, nach den Ansprüchen 1 und 9, wobei das Loch (41) am Stahlblock (36), das für den Bolzen (37) bestimmt ist, versetzt ist von der Mitte des ersten Stahlblocks (40) aus und wird auf dem Stahlblock (36) mittig zur Mitte des quadratischen Profils der Eckstange (30) positioniert, die mit dem Mittelloch (16) auf der Vorderseite zusammenfällt Oberfläche des Vorsprungs (12) am Eckblock (10).

17. Die modulare Rahmenstruktur, die für die Einhausung einer Niederspannungs-Schaltgeräte- und Steuergeräteanordnung geeignet ist, nach den Ansprüchen 1 und 9, wobei der Bolzen (37) durch den O-Ring (38) im Stahlblock (36) gehalten wird.

18. Modulare Rahmenstruktur zur Einhausung einer Niederspannungs-Schalt- und Steuergeräteanordnung nach den Ansprüchen 1 und 9, wobei sich die beiden Gewindelöcher (42) auf zwei Seiten des Stahlblocks (36) befinden, die sichtbar sind, wenn er eingesetzt ist im Schlitz (35) an den beiden Längsinnenflächen (31) des Eckstabes (30) stecken und in einer Linie mit der Lochreihe (33a und 33b) an den beiden Längsinnenflächen (31) des Eckstabes positioniert sind (30).

19. Die modulare Rahmenstruktur, die für die Einhausung einer Niederspannungs-Schaltgeräte- und Steuergeräteanordnung geeignet ist, nach Anspruch 1, wobei die Höhe der zwei quadratischen Vorsprünge (51) auf der oberen und unteren Basisfläche (56a) der Eckstangenverlängerung beträgt Der Eckstangen-Verlängerungsblock (50) ist höher als die beiden rechteckigen Vorsprünge (52) an zwei angrenzenden seitlichen Grundflächen (56b) des Eckstangen-Verlängerungsblocks (50).

20. Die modulare Rahmenstruktur, die für die Einhausung einer Niederspannungs-Schaltgeräte- und Steuergerätebaugruppe geeignet ist, nach Anspruch 1, wobei jedes Gewindeloch (58) auf der Vorderfläche des Vorsprungs (52) in der Mitte zwischen dem freien Loch ( 59) und der entsprechenden Kante der Vorderfläche des Vorsprungs (52).

21. Die modulare Rahmenstruktur, die für die Einhausung einer Niederspannungs-Schaltgeräte- und Steuergeräteanordnung geeignet ist, nach Anspruch 1, wobei die Höhe und die Breite des Vorsprungs (52) des Eckstangen-Verlängerungsblocks (50) gleich der inneren Breite und sind Höhe des Querschnitts einer Querstange (65).

22. Die modulare Rahmenstruktur, die zum Gehäuse einer Niederspannungs-Schaltgeräte- und Steuergerätebaugruppe geeignet ist, nach Anspruch 1, wobei das umgekehrte Ende und das andere Ende des zylindrischen Ankers (68) der Querstange (65) zwei Gewindelöcher aufweisen (66a) auf den jeweiligen inneren Längsflächen, um die Modularität der Reihe von Löchern (66a und 66b) aufrechtzuerhalten.

23. Die modulare Rahmenstruktur, die zum Gehäuse einer Niederspannungs-Schaltgeräte- und Steuergerätebaugruppe geeignet ist, nach Anspruch 1, wobei das freie Loch (68a) am zylindrischen Anker (68) durch die Mitte des zylindrischen Ankers (68) verläuft ein anderes freies Loch (68a) wird in der Mitte zwischen dem freien Loch (68b) und einem Ende des zylindrischen Ankers (68) platziert, wodurch das freie Loch (68a) diagonal an jedem Ende der Querstange (65) liegt.

24. Die modulare Rahmenstruktur, die für die Einhausung einer Niederspannungs-Schaltgeräte- und Steuergeräteanordnung geeignet ist, nach Anspruch 1, wobei die beiden freien Löcher (67a und 67b) am Querstangeneinsatz (67) mit den beiden freien Löchern (68a) übereinstimmend angeordnet sind und 68b) am zylindrischen Anker (68), wodurch die Montagevorrichtung (70) an jedem Ende der Querstange (65) durch Löcher (68a und 68b) am zylindrischen Anker (68) frei beweglich ist.

25. Die modulare Rahmenstruktur, die für die Einhausung einer Niederspannungs-Schaltgeräte- und Steuergeräteanordnung geeignet ist, nach Anspruch 1, wobei zwei Bolzen (72) in den Montagevorrichtungen (70) diagonal an jedem Ende einer Querstange (65) angeordnet sind.

26. Die modulare Rahmenstruktur, die für die Einhausung einer Niederspannungs-Schaltgeräte- und Steuergeräteanordnung geeignet ist, nach Anspruch 1, wobei die Höhe und die Breite der Vorderfläche des Vorsprungs (81) am Querstangen-Verlängerungsblockgleich der Innenfläche sind Höhe und Breite des Querschnitts der Querstange (65), die es ermöglichen, dass der Vorsprung (81) in ein Ende der Querstange (65) eingeführt werden kann.

27. Die modulare Rahmenstruktur, die für die Einhausung einer Niederspannungs-Schaltgeräte- und Steuergeräteanordnung geeignet ist, nach Anspruch 1, wobei die zwei Gewindelöcher (88) und ein freies Loch (87) vertikal in einer Linie mit einem gleichen Abstand zum freien Loch angeordnet sind (87) in der Mitte dieser Linie der inneren flachen Oberfläche (86) des Querstangen-Verlängerungsblocks (80), wobei jedes Gewindeloch (88) in der Mitte zwischen dem freien Loch (87) und dem platziert ist entsprechende Kante der inneren flachen Oberfläche (86) und jedes Gewindeloch (88) ist diagonal zum entsprechenden Gewindeloch (88) angeordnet.

28. Die modulare Rahmenstruktur, die für die Einhausung einer Niederspannungs-Schaltgeräte- und Steuergeräteanordnung geeignet ist, nach Anspruch 1, wobei der Abstand zwischen einem Gewindeloch (88) in der oberen oder unteren Reihe und einem entsprechenden freien Loch (87) in der mittleren Reihe beträgt Der Querstangenverlängerungsblock ist gleich dem Abstand zwischen dem freien Loch (68a) und dem freien Loch (68b) am zylindrischen Anker (68) am Ende einer Querstange (65).

29. Die modulare Rahmenstruktur, die für die Einhausung einer Niederspannungs-Schaltgerätekombination nach Anspruch 1 und 28 angepasst ist, wobei sich der Bolzen (72) und der Führungsstift (73) der Montagevorrichtung (70) an jedem Ende des Kreuzes befinden Die Querstange (65) wird in das entsprechende Gewindeloch (88) und das freie Loch (87) eingesetzt, wenn eine Querstange (65) an der inneren flachen Oberfläche (86) des Querstangen-Verlängerungsblocks (80) montiert wird, wodurch zwei Querstangen entstehen (65) kann an der inneren flachen Oberfläche (86) des Querstangen-Verlängerungsblocks (80) montiert werden.

30. Die modulare Rahmenstruktur, die für die Einhausung einer Niederspannungs-Schaltgeräte- und Steuergeräteanordnung geeignet ist, nach Anspruch 1, wobei der lineare Abstand zwischen einem freien Loch (59, 81c oder 87) und einem jeweiligen angrenzenden Gewindeloch (58, 81b oder 88) am Eckstangen-Verlängerungsblock (50) bzw. Querstangen-Verlängerungsblock (80) gleich dem Abstand zwischen den beiden freien Löchern (68a und 68b) am zylindrischen Anker (68) am Ende einer Querstange (65) ist. oder auf den Abstand zwischen den beiden freien Löchern (67a und 67b) am Querstangeneinsatz (67).

31. Die modulare Rahmenstruktur, die für die Einhausung einer Niederspannungs-Schaltgeräte- und Steuergerätebaugruppe geeignet ist, nach Anspruch 1, wobei sich die beiden Gewindelöcher auf beiden Seiten eines freien Lochs auf einer bestimmten Oberfläche des Eckstangen-Verlängerungsblocks (50) oder der Querstange befinden Der Verlängerungsblock (80) ermöglicht die Montage einer Querstange (65) an einem Eckstangen-Verlängerungsblock (50) oder Querstangen-Verlängerungsblock (80), unabhängig von der diagonalen Platzierung des Bolzens (72) der Montagevorrichtung (70). an jedem Ende der Querstange (65).

32. Verfahren zum Zusammenbau der Komponenten zum Aufbau einer modularen Rahmenstruktur nach Anspruch 1, umfassend die Schritte:
a) Zusammenbau einer Eckstange (30) mit einem Eckblock (10):
i) Vorbereitung der Eckstabanker: Ein Stahlblock (36) wird in Schlitze (35) an einem Ende des Eckstabs (30) eingesetzt und zwei Bolzen (37) werden in entgegengesetzte Richtungen vom anderen Ende der Ecke eingesetzt Stange (30); der zweite Stahlblock (36) wird in die anderen Schlitze (35) am anderen Ende der Eckstange (30) eingesetzt; jeder Bolzen (37) wird durch das Loch (41) geführt; An jedem Bolzen (37) ist ein O-Ring (38) angebracht;
ii) der konische Vorsprung (12) am Eckblock (10) wird in seiner vollen Höhe in ein Ende der Eckstange (30) eingeführt und der Bolzen (37) wird in das Mittelloch (16) am Vorsprung (12) eingetrieben Der Eckblock (10) wird mit einem Schraubenzieher durch die Öffnung (45) an der Eckstange (30) gesteckt, bis die Dichtung (22) in die Nut (21) an der quadratischen Grundfläche (14) gedrückt wird;
b) Montage einer Querstange (65) an eine Eckstange (30) oder eine Außen-/Innen-Querstange (65):
i) zwischen dem Ende des Querriegels (65) und dem Eckriegel (30) bzw. dem äußeren Querriegel (65) ein Querriegeleinsatz (67) eingelegt ist. Wenn eine Querstange (65) an andere Rahmenelemente montiert wird, d. h. an einen Eckstangen-Verlängerungsblock (50), Querstangen-Verlängerungsblock (80) oder eine interne Querstange (65), wird der Querstangen-Einsatz (67) nicht verwendet zwischen dem Querstangenende und diesem Rahmenelement.
ii) der Bolzen (72) in der Montagevorrichtung (70) am Ende des Querriegels (65) in das entsprechende Gewindeloch (33a bzw. 66a) an der Längsfläche des Eckriegels (30) bzw. Querriegels (65) eingetrieben wird ), während der Führungsstift (73) mit einem durch die Öffnung (69) eingeführten Schraubendreher in ein anderes entsprechendes freies Loch (33b oder 66b) an der Längsfläche der Eckstange (30) oder Querstange (65) eingeführt wird, auf die Querstange (65) schieben, bis der Bolzen (72) fest sitzt.
c) Montage eines Eckstangen-Verlängerungsblocks (50) an einer Eckstange (30): Einer der konischen Vorsprünge (51) wird in voller Höhe in das Ende der Eckstange (30) eingeführt und dann der Bolzen (37) hineingesteckt Der Eckstangenanker (34) wird mit einem durch die Öffnung (45) an der Eckstange (30) eingeführten Schraubenzieher in das mittlere Loch (53) am Vorsprung (51) am Eckstangen-Verlängerungsblock (50) getrieben, bis die Dichtung anliegt (22) wird in die Nut (54) auf der quadratischen Grundfläche (56a) gedrückt. Der andere Vorsprung (51) des Eckstangen-Verlängerungsblocks (50) wird in ein Ende einer anderen Eckstange (30) eingeführt und auf ähnliche Weise zusammengebaut;
d) Montage eines Eckstangen-Verlängerungsblocks (50) an einer Querstange (65): Der konische rechteckige Vorsprung (52) wird in voller Höhe in das Ende der Querstange (65) eingeführt; der Bolzen (72) in der Montagevorrichtung (70) am Ende der Querstange (65) wird in eines der entsprechenden Gewindelöcher (58) am Vorsprung (52) getrieben, während der Führungsstift (73) eingeführt wird in das freie Loch (59) am Vorsprung (52) am Eckstangen-Verlängerungsblock (50) einführen, indem Sie einen Schraubenzieher durch die Öffnung (69) an der Querstange (65) stecken, bis die Dichtung (61) gedrückt wird in die Nut (60) auf der rechteckigen Grundfläche (56b);
e) Montage eines Querstangen-Verlängerungsblocks (80) an einer Querstange (65): Die konischen Vorsprünge (81) des Querstangen-Verlängerungsblocks (80) werden in voller Höhe in das Ende der Querstange (65) eingeführt, der Bolzen (72) in der Montagevorrichtung (70) am Ende der Querstange (65) wird in das Gewindeloch (81b) am Vorsprung (81) getrieben, während der Führungsstift (73) ins Freie eingeführt wird Loch (81c) am Vorsprung (81) am Querstangen-Verlängerungsblock (80) mit einem durch die Öffnung (69) am Querstangen-Verlängerungsblock (80) eingeführten Schraubenzieher, bis die Dichtung (61) in die Nut gedrückt wird ( 85) auf der rechteckigen Grundfläche (82);
f) Zusammenbau einer Querstange (65) mit einem Querstangen-Verlängerungsblock (80) unter Verwendung seiner ebenen Flächen (83a und 83c): Der Bolzen (72) in der Montagevorrichtung (70) am Ende der Querstange (65) wird angetrieben in eines der entsprechenden Gewindelöcher (90) stecken, während der Führungsstift (73) mit einem Schraubenzieher in das freie Loch (91) auf der flachen Oberfläche (83a oder 83c) des Querstangen-Verlängerungsblocks (80) eingeführt wird durch die Öffnung (69) an der Querstange (65) eingeführt, bis die Querstange (65) vollständigen Kontakt mit dem Querstangen-Verlängerungsblock (80) hat;
g) Montage einer oder zweier Querstangen an der inneren flachen Oberfläche (86) des Querstangen-Verlängerungsblocks (80): Der Bolzen (72) in der Montagevorrichtung (70) am Ende der Querstange (65) wird in eine ausgewählte Position getrieben Gewindeloch (88), während der Führungsstift (73) mit einem durch die Öffnung (69) eingeführten Schraubenzieher in das ausgewählte freie Loch (87) auf der flachen Innenfläche (86) des Querstangen-Verlängerungsblocks (80) eingeführt wird ) auf der Querstange (65), bis die Querstange (65) vollständigen Kontakt mit der flachen Oberfläche (86) des Querstangen-Verlängerungsblocks (80) hat. In ähnlicher Weise kann je nach den Designanforderungen der modularen Rahmenstruktur eine weitere Querstange (65) an derselben flachen Oberfläche (86) des Querstangen-Verlängerungsblocks (80) montiert werden.

## Revendications

1. Structure de cadre modulaire adaptée pour l'enceinte d'un ensemble d'appareillage de commutation et de commande basse tension, la structure de cadre modulaire étant constituée d'une pluralité de blocs d'angle, de barres d'angle, de blocs d'extension de barre d'angle, de barres transversales et de blocs d'extension de barre transversale assemblés ensemble. et comprenant :
a. un bloc d'angle cubique solide (10) comprenant :
i. trois saillies orthogonales de forme carrée (12), avec des bords supérieurs effilés (20), sur trois de ses faces de base, chacune ayant une hauteur de h1 mm depuis la face de base jusqu'à la surface supérieure de la saillie (12), un centre taraudé trou (16) ayant un diamètre de d1 mm au centre de la surface supérieure de la saillie (12) et une hauteur de filetage de h2 mm s'étendant du centre de la surface supérieure de la saillie (12) vers le centre du bloc d'angle (10) où la hauteur du filetage de h2 mm est inférieure à la hauteur de h3 mm depuis la surface supérieure de la saillie (12) jusqu'au centre du bloc d'angle (10) et la profondeur du trou central (16) est supérieure à h1 mm , où la profondeur du trou central (16) s'arrête toujours à une distance inférieure à h3 - 0,5d1 mm de la surface supérieure de la saillie (12) et se situe dans la plage h1 < h2 < h3-0,5d1 mm tout en gardant une espace de g1 mm entre l'extrémité du trou central (16) et le bord le plus proche du trou auxiliaire (17), en évitant que le trou central (16) ne s'enfonce dans le trou auxiliaire (17) et trois faces planes sans aucune saillie sur celles-ci, le des faces plates (14) du bloc d'angle étant configurées pour rester à l'extérieur lorsque la structure de cadre modulaire est assemblée ;
ii. un trou auxiliaire (17) fermé par une vis de réglage (18), ayant un diamètre d1 mm et une hauteur de filetage h2 mm situé au centre d'une face plate (14) et aligné avec le trou central (16) dans la saillie (12 ) sur la face de base correspondante (13) du bloc d'angle (10), où la largeur d'une face de base (13) ou d'une face plate (14) du bloc d'angle (10) est de h4 mm et la hauteur de filetage de celui-ci est de h2 mm. est plus profond dans le bloc d'angle (10) que celui du trou central (16), grâce à quoi la hauteur h1 mm de la saillie (12) est en outre déterminée de manière à ce que la hauteur de filetage h2 mm du trou auxiliaire (17) et la hauteur h2 mm hauteur de filetage du trou central (16), tous deux alignés, ne se rencontrent pas à l'intérieur du bloc d'angle (10), créant un espace de g2 mm entre les extrémités des deux profondeurs des deux trous (16 et 17) où le g2 un espace de mm ayant une résistance matérielle adéquate pour résister au couple de deux vis enfoncées dans le trou central (16) et le trou auxiliaire (17) pour éviter de créer tout passage entre eux ou toute perturbation l'un de l'autre ;
iii. une face de base (13) comportant une rainure continue (21) au bas de la saillie (12) et sur les deux bords externes de la face de base (13), la profondeur de la rainure (21) étant suffisamment profonde pour contenir un joint ; et
iv. iv. un joint de forme carrée (22) avec des coins arrondis placé autour de la saillie (12) et inséré dans la rainure (21), ayant une largeur interne légèrement supérieure à la largeur de la surface supérieure de la saillie (12) et une hauteur de le joint (22) n'est pas uniforme sur les quatre côtés, dont deux côtés du joint (22) qui aboutissent sur la rainure (21) sur les bords extérieurs du bloc d'angle (10) sont renflés et la hauteur de deux côtés renflés adjacents (23) du joint (22) est supérieure à celle des deux autres côtés du joint (22) et est légèrement supérieure à la profondeur de la rainure (21) ;
b. une barre d'angle (30) ayant un profil de forme carrée avec des coins arrondis et des surfaces longitudinales internes avec une série de trous taraudés (33a) et de trous libres (33b) situés les uns à la suite des autres, comprenant :
i. je. une largeur interne d'un tel profil étant légèrement supérieure à la largeur de la surface avant de la saillie (12) du bloc d'angle (10), ne dépassant pas la largeur de h4 mm de la face de base ou de la face plate du bloc d'angle (10). ; et
ii. deux ancrages de barre d'angle (34) comprenant chacun un bloc d'acier (36) de forme partiellement carrée avec une épaisseur importante, un trou (41) et deux trous taraudés (42) sur l'épaisseur ; un boulon (37) ; et un joint torique (38), grâce auquel les deux ancrages de barre d'angle (34) sont placés aux deux extrémités de la barre d'angle (30) dans une fente (35) située après le premier trou de chaque extrémité de la barre d'angle (30);
c. une traverse (65) présentant un profil de forme rectangulaire avec des coins arrondis et des surfaces longitudinales internes avec des séries de trous taraudés (66a) et de trous libres (66b) situés les uns à la suite des autres, comprenant à chaque extrémité :
i. une ancre cylindrique (68) ayant deux trous libres (68a et 68b) sur son corps, installée à l'intérieur à chaque extrémité de la barre transversale (65) en retournant une extrémité de l'ancre cylindrique (68);
ii. un dispositif d'assemblage (70) comprenant une broche de guidage (73) avec une plaque de base (71), un boulon (72), un ressort conique (74) et une rondelle de retenue (75), grâce à quoi le boulon (72) est inséré à travers le trou (71a) sur la plaque de base (71), le ressort conique (74) et le trou (68a) sur l'ancre cylindrique (68) et est retenu sur l'ancre cylindrique (68) par une rondelle de retenue (75) fixée à l'extrémité filetée du boulon (72) tandis que la goupille de guidage (73) est insérée à travers le trou (68b) sur l'ancrage cylindrique (68); et
iii. un insert de barre transversale (67) comportant des trous libres (67b) situés au centre et un autre trou libre (67a) au milieu entre le trou libre (67b) et une extrémité de l'insert de barre transversale (67), correspondant au des trous libres (68b et 68a) sur l'ancrage cylindrique (68);
d. un bloc d'extension de barre d'angle (50) pour joindre une pluralité de barres d'angle (30) et de barres transversales (65) comprenant :
i. deux saillies de forme carrée (51) sur ses faces de base supérieure et inférieure (56a) pour assembler des barres d'angle et deux saillies de forme rectangulaire (52) sur deux faces de base latérales adjacentes (56b) pour assembler des barres transversales, dont les bords ( 51a et 52a) de la surface avant des saillies de forme carrée (51) et des saillies de forme rectangulaire (52) sont légèrement effilées et ont des coins arrondis ;
ii. un trou central (53) au centre de la surface avant de chaque saillie supérieure et inférieure (51) dont la largeur de la surface avant est égale à la largeur de la surface avant de la saillie (12) sur le bloc d'angle ( dix);
iii. deux trous taraudés (58) et un trou libre (59) situés en ligne à égale distance du trou libre (59) au centre sur la surface avant de la saillie de forme rectangulaire (52) ;
iv. une rainure continue (54) située au bas de chaque saillie (51) sur les deux bords externes des faces de base de forme carrée supérieure et inférieure (56a) ;
v. une rainure continue (60) située au bas de chaque saillie (52) sur trois bords externes de la face de base rectangulaire (56b) ;
vi. un joint de forme carrée (22) aux coins arrondis placé autour de la saillie (51) et inséré dans la rainure (54) où la largeur interne du joint (22) est légèrement supérieure à la largeur de la surface supérieure de la saillie ( 51) et la hauteur du joint (22) n'est pas égale sur les quatre côtés dont deux côtés du joint (22) qui rejoignent la rainure (54) sur les bords extérieurs des faces de base de forme carrée (56a). sont renflés et la hauteur de deux côtés renflés adjacents (23) du joint (22) est supérieure à celle des deux autres côtés du joint (22) et est légèrement supérieure à la profondeur de la rainure (54) permettant aux deux les côtés sans renflements reposent sur la face de base de forme carrée supérieure ou inférieure (56a) ; et
vii. un joint de forme rectangulaire (61) aux coins arrondis placé autour de la saillie (52) et inséré dans la rainure (60) où la largeur interne du joint (61) est légèrement supérieure à la largeur de la surface supérieure de la saillie ( 52) et la hauteur du joint (61) n'est pas égale sur les quatre côtés dont trois côtés du joint (61) qui rejoignent la rainure (60) sur les trois bords extérieurs de la face de base rectangulaire (56b) sont bombé et la hauteur de trois côtés bombés adjacents (62) du joint (61) est supérieure à celle de l'autre côté du joint (61) et est légèrement supérieure à la profondeur de la rainure (60) permettant au côté sans le renflement repose sur une face de base de forme rectangulaire (56b) ; et
e. un bloc d'extension de barre transversale (80) pour joindre une pluralité de barres transversales (65) comprenant :
i. deux saillies latérales de forme rectangulaire (81) ayant des bords supérieurs légèrement effilés (81a) et des coins arrondis, sur les faces de base du côté gauche (80a) et du côté droit (80b) (82) ;
ii. deux trous taraudés (81b) et un trou libre (81c) situés en ligne à égale distance du trou libre (81c) au centre de la surface avant des deux saillies (81) où chaque trou taraudé (81b) est placé au milieu entre le trou libre (81c) et le bord correspondant de la surface avant des saillies (81), des trous taraudés (81b) sur les deux surfaces avant des saillies (81) sont situés en diagonale ;
iii. deux trous taraudés (90) et un trou libre (91) situés en ligne à égale distance du trou libre (91) au centre de la surface plane (83a ou 83c) où chaque trou taraudé (90) est placé dans le le point médian entre le trou libre (91) et le bord correspondant de la surface plane (83a et 83c) et les trous taraudés (90) sur les deux surfaces planes (83a et 83c) sont situés en diagonale ;
iv. deux trous libres (87) et quatre trous taraudés (88) disposés en trois rangées horizontales pour pouvoir sélectionner une configuration correspondante d'un trou libre (87) et d'un trou taraudé (88) en fonction de l'orientation de la broche de guidage (73 ) et le boulon (72) du dispositif d'assemblage (70) à chaque extrémité de la traverse (65) ;
v. une rainure continue (85) située au bas de chaque saillie (81) sur trois bords externes de la face de base (82) ; et
vi. un joint de forme rectangulaire (61) aux coins arrondis placé autour de la saillie (81) et inséré dans la rainure (85), dont la hauteur et la largeur internes (61) sont légèrement supérieures à la hauteur et à la largeur de la surface supérieure de la saillie (81) et la hauteur du joint (61) n'est pas uniforme sur les quatre côtés dont trois côtés qui aboutissent sur la rainure (85) sur les bords des faces de base rectangulaires (82) sont renflés et la hauteur des trois côtés renflés adjacents (62) du joint (61) est supérieure à celle de l'autre côté du joint (61) et est légèrement supérieure à la profondeur de la rainure (85).

2. Structure de cadre modulaire adaptée pour l'enceinte d'un ensemble d'appareillage de commutation et de commande basse tension selon la revendication 1, dans laquelle chaque saillie (12) du bloc d'angle (10) a des bords latéraux arrondis (12a), des coins arrondis (12b) sur le surface supérieure, des bords effilés (12c) sur la surface supérieure et un trou central (16) situé au centre de la surface supérieure.

3. Structure de cadre modulaire adaptée pour l'enceinte d'un ensemble d'appareillage de commutation et de commande basse tension selon la revendication 1, dans laquelle la hauteur de la saillie (12) h1 mm, du bloc d'angle (10), est déterminée pour fournir une hauteur de filetage h2 adéquate, mm au trou central (16), qui est supérieur à h1, de sorte qu'une vis enfoncée dans une profondeur dans le trou central (16) soit suffisante pour assembler fermement un élément de cadre avec stabilité lors de l'assemblage au bloc d'angle (10)..

4. Structure de cadre modulaire adaptée pour l'enceinte d'un ensemble d'appareillage de commutation et de commande basse tension selon les revendications 1 et 3, dans laquelle la hauteur de la saillie (12), du bloc d'angle (10), est suffisamment élevée pour l'insérer. en entier et retenu à l'intérieur de la barre d'angle et la hauteur de la saillie (12) h1 mm est déterminée pour limiter la hauteur du filetage du trou central (16) à h2 mm afin de permettre à l'espace de g1 mm ayant une résistance matérielle adéquate pour résister au couple de la vis enfoncée dans le trou central (16) en évitant toute perturbation du trou auxiliaire (17) ou des deux autres trous centraux (16) ainsi la longueur de l'espace porte la propriété de g1 étant supérieure à 1,5 mm où g1 = h3-h2- 0,5d1 mm.

5. Structure de cadre modulaire adaptée pour l'enceinte d'un ensemble d'appareillage de commutation et de commande basse tension selon la revendication 1, dans laquelle la hauteur de filetage du trou auxiliaire (17), du bloc d'angle (10), est supérieure à h3-0,5d1 mm..

6. Structure de cadre modulaire adaptée pour l'enceinte d'un ensemble d'appareillage de commutation et de commande basse tension selon la revendication 1, dans laquelle la longueur de l'espace entre les points d'extrémité des profondeurs du trou central (16) et du trou auxiliaire (17), du bloc d'angle (10), porte la propriété que g2 soit supérieur à 1,5 mm où g2 = h4+h1-2h2 en millimètres.

7. Structure de cadre modulaire adaptée pour l'enceinte d'un ensemble d'appareillage de commutation et de commande basse tension selon la revendication 1, dans laquelle la disposition de trois trous centraux (16) et un trou auxiliaire (17) dans le bloc d'angle (10) n'empêche aucun des quatre des trous pénétrant dans l'un des autres trous (16 ou 17) ou faisant tout passage pour faire entrer une substance dans l'enceinte électrique.

8. Structure de cadre modulaire adaptée à l'enceinte d'un ensemble d'appareillage de commutation et de commande basse tension selon la revendication 1, dans laquelle l'ouverture (45) dans la barre d'angle est configurée pour être utilisée pour insérer un tournevis pour fixer l'ancrage de la barre d'angle (34).

9. Structure de cadre modulaire adaptée pour l'enceinte d'un ensemble d'appareillage de commutation et de commande basse tension selon la revendication 1, dans laquelle la forme du bloc d'acier (36) apparaît comme si deux parties de forme rectangulaire plus petites (39) avaient été retirées des deux diagonales. coins d'un premier bloc d'acier de forme carrée (40) ayant une longueur de côté de x1 mm.

10. Structure de cadre modulaire adaptée à l'enceinte d'un ensemble d'appareillage de commutation et de commande basse tension selon les revendications 1 et 9, dans laquelle la hauteur et la largeur des parties de forme rectangulaire (39) sont déterminées de manière à créer un espace adéquat pour insérer le coin. d'ancrage de la barre (34) dans la fente (35).

11. Structure de cadre modulaire adaptée à l'enceinte d'un ensemble d'appareillage de commutation et de commande basse tension selon les revendications 1 et 9, dans laquelle la hauteur et la largeur des parties de forme rectangulaire (39) retirées du premier bloc (40) sont minimisées dans la mesure où lequel l'ancrage de barre d'angle (34) peut être inséré dans la fente (35) et la longueur maximale du bloc d'acier (36) s'emmêle avec la section transversale de la barre transversale (30).

12. Structure de cadre modulaire adaptée pour l'enceinte d'un ensemble d'appareillage de commutation et de commande basse tension selon les revendications 1 et 9, dans laquelle la partie du bloc d'acier (36) qui s'emmêle avec la section transversale de la barre transversale (30) déplace le barre transversale vers le bloc d'angle lors de l'assemblage de la barre d'angle (30) au bloc d'angle (10).

13. Structure de cadre modulaire adaptée pour l'enceinte d'un ensemble d'appareillage de commutation et de commande basse tension selon les revendications 1 et 9, dans laquelle la longueur latérale x1 mm du bloc d'acier (36) est supérieure à la largeur interne du profil de forme carrée, de la barre d'angle et est égal à la somme de la largeur intérieure du profil carré de la barre d'angle et de l'épaisseur de la barre d'angle qui est x3 mm.

14. Structure de cadre modulaire adaptée pour l'enceinte d'un ensemble d'appareillage de commutation et de commande basse tension selon les revendications 1 et 9, dans laquelle la surface latérale (44) du bloc d'acier résultant (36) est maintenue à surface uniforme avec les deux surfaces internes longitudinales ( 31) de la barre d'angle (30).

15. Structure de cadre modulaire adaptée pour l'enceinte d'un ensemble d'appareillage de commutation et de commande basse tension selon les revendications 1 et 9, dans laquelle le bloc d'acier résultant (36) après avoir retiré les deux parties (39) a deux côtés de chacun ayant une largeur de x2. mm, qui restent à l'intérieur de la barre d'angle (30) lorsque le bloc d'acier (36) est complètement inséré dans la fente (35) de la barre d'angle (30) où la largeur x2 mm est toujours légèrement inférieure à la largeur interne du carré -profil en forme de la barre d'angle (30), permettant au bloc d'acier (36) d'être inséré dans les fentes (35) de la barre d'angle (30).

16. Structure de cadre modulaire adaptée à l'enceinte d'un ensemble d'appareillage de commutation et de commande basse tension selon les revendications 1 et 9, dans laquelle le trou (41) sur le bloc d'acier (36), destiné au boulon (37), est décalé. à partir du centre du premier bloc d'acier (40) et est positionné sur le bloc d'acier (36) en se centrant par rapport au centre du profil de forme carrée de la barre d'angle (30), coïncidant avec le trou central (16) sur l'avant surface de la saillie (12) sur le bloc d'angle (10).

17. Structure de cadre modulaire adaptée pour l'enceinte d'un ensemble d'appareillage de commutation et de commande basse tension selon les revendications 1 et 9, dans laquelle le boulon (37) est retenu dans le bloc d'acier (36) par le joint torique (38).

18. Structure de cadre modulaire adaptée à l'enceinte d'un ensemble d'appareillage de commutation et de commande basse tension selon les revendications 1 et 9, dans laquelle les deux trous taraudés (42) sont situés sur deux côtés du bloc d'acier (36), visibles lorsqu'il est inséré, dans la fente (35) sur les deux surfaces longitudinales internes (31) de la barre d'angle (30) et sont positionnés au droit de la série de trous (33a et 33b) sur les deux surfaces longitudinales internes (31) de la barre d'angle (30).

19. Structure de cadre modulaire adaptée à l'enceinte d'un ensemble d'appareillage de commutation et de commande basse tension selon la revendication 1, dans laquelle la hauteur des deux saillies de forme carrée (51) sur les faces de base supérieure et inférieure (56a) de l'extension de la barre d'angle (50) sont plus hautes que les deux saillies de forme rectangulaire (52) sur deux faces de base latérales adjacentes (56b) du bloc d'extension de barre d'angle (50).

20. Structure de cadre modulaire adaptée pour l'enceinte d'un ensemble d'appareillage de commutation et de commande basse tension selon la revendication 1, dans laquelle chaque trou taraudé (58) sur la surface avant de la saillie (52) est placé au milieu entre le trou libre (58) 59) et le bord correspondant de la surface avant de la saillie (52).

21. Structure de cadre modulaire adaptée pour l'enceinte d'un ensemble d'appareillage de commutation et de commande basse tension selon la revendication 1, dans laquelle la hauteur et la largeur de la saillie (52) du bloc d'extension de barre d'angle (50) sont égales à la largeur intérieure et hauteur de la section transversale d'une barre transversale (65).

22. Structure de cadre modulaire adaptée pour l'enceinte d'un ensemble d'appareillage de commutation et de commande basse tension selon la revendication 1, dans laquelle l'extrémité retournée et l'autre extrémité de l'ancrage cylindrique (68), de la barre transversale (65), comportent deux trous taraudés. (66a) sur les surfaces longitudinales internes respectives pour conserver la modularité sur la série de trous (66a et 66b).

23. Structure de cadre modulaire adaptée pour l'enceinte d'un ensemble d'appareillage de commutation et de commande basse tension selon la revendication 1, dans laquelle le trou libre (68a) sur l'ancrage cylindrique (68) traverse le centre de l'ancrage cylindrique (68) et le un autre trou libre (68a) est placé au milieu entre le trou libre (68b) et une extrémité de l'ancrage cylindrique (68), le trou libre (68a) étant ainsi situé en diagonale à chaque extrémité de la barre transversale (65).

24. Structure de cadre modulaire adaptée pour l'enceinte d'un ensemble d'appareillage de commutation et de commande basse tension selon la revendication 1, dans laquelle les deux trous libres (67a et 67b) sur l'insert de barre transversale (67) sont situés en coïncidence avec les deux trous libres (68a). et 68b) sur l'ancrage cylindrique (68), respectivement, de sorte que le dispositif d'assemblage (70) à chaque extrémité de la barre transversale (65) est librement mobile à travers les trous (68a et 68b) sur l'ancrage cylindrique (68).

25. Structure de cadre modulaire adaptée pour l'enceinte d'un ensemble d'appareillage de commutation et de commande basse tension selon la revendication 1, dans laquelle deux boulons (72) dans les dispositifs d'assemblage (70) sont situés en diagonale à chaque extrémité d'une barre transversale (65).

26. Structure de cadre modulaire adaptée pour l'enceinte d'un ensemble d'appareillage de commutation et de commande basse tension selon la revendication 1, dans laquelle la hauteur et la largeur de la surface avant de la saillie (81) sur le bloc d'extension de barre transversale sont égales à la surface interne. la hauteur et la largeur de la section transversale de la barre transversale (65) permettant à la saillie (81) d'être insérée dans une extrémité de la barre transversale (65).

27. Structure de cadre modulaire adaptée à l'enceinte d'un ensemble d'appareillage de commutation et de commande basse tension selon la revendication 1, dans laquelle les deux trous taraudés (88) et un trou libre (87) sont placés verticalement en ligne à égale distance du trou libre. (87) au centre de cette ligne, de la surface plane interne (86) du bloc d'extension de barre transversale (80), où chaque trou taraudé (88) est placé au milieu entre le trou libre (87) et le bord correspondant de la surface plane interne (86) et chaque trou taraudé (88) est situé en diagonale par rapport au trou taraudé correspondant (88).

28. Structure de cadre modulaire adaptée à l'enceinte d'un ensemble d'appareillage de commutation et de commande basse tension selon la revendication 1, dans laquelle la distance entre un trou taraudé (88) dans la rangée supérieure ou inférieure et un trou libre correspondant (87) dans la rangée médiane de le bloc d'extension de barre transversale, est égale à la distance entre le trou libre (68a) et le trou libre (68b) sur l'ancrage cylindrique (68) à l'extrémité d'une barre transversale (65).

29. Structure de cadre modulaire adaptée pour l'enceinte d'un ensemble d'appareillage de commutation et de commande basse tension selon les revendications 1 et 28, le boulon (72) et la goupille de guidage (73) du dispositif d'assemblage (70) à chaque extrémité de la traverse, barre transversale (65), sont insérées dans le trou taraudé (88) et le trou libre (87) correspondants lors de l'assemblage d'une barre transversale (65) à la surface plane interne (86) du bloc d'extension de barre transversale (80), ce qui donne deux barres transversales (65) peut être assemblé à la surface plate interne (86) du bloc d'extension de barre transversale (80).

30. Structure de cadre modulaire adaptée à l'enceinte d'un ensemble d'appareillage de commutation et de commande basse tension selon la revendication 1, dans laquelle la distance linéaire entre un trou libre (59, 81c ou 87) et un trou taraudé adjacent respectif (58, 81b ou 88) sur le bloc d'extension de barre d'angle (50) ou le bloc d'extension de barre transversale (80), est égale à la distance entre les deux trous libres (68a et 68b) sur l'ancrage cylindrique (68) à l'extrémité d'une barre transversale (65) ou à la distance entre les deux trous libres (67a et 67b) sur l'insert de barre transversale (67).

31. Structure de cadre modulaire adaptée pour l'enceinte d'un ensemble d'appareillage de commutation et de commande basse tension selon la revendication 1, dans laquelle les deux trous taraudés de chaque côté d'un trou libre sur une surface particulière du bloc d'extension de barre d'angle (50) ou de la barre transversale le bloc d'extension (80) permet d'assembler une barre transversale (65) à un bloc d'extension de barre d'angle (50) ou à un bloc d'extension de barre transversale (80), quel que soit le placement en diagonale du boulon (72) du dispositif d'assemblage (70) à chaque extrémité de la barre transversale (65).

32. Procédé d'assemblage des composants pour construire une structure de cadre modulaire selon la revendication 1, comprenant les étapes suivantes :
a. Assemblage d'une barre d'angle (30) avec un bloc d'angle (10) :
i. Préparation des ancrages de barre d'angle : un bloc d'acier (36) est inséré dans une fente (35) à une extrémité de la barre d'angle (30) et deux boulons (37) sont insérés, orientés dans des directions opposées, depuis l'autre extrémité du coin. barre (30); le deuxième bloc d'acier (36) est inséré dans les autres fentes (35) à l'autre extrémité de la barre d'angle (30) ; chaque boulon (37) passe à travers le trou (41) ; Un joint torique (38) est fixé à chaque boulon (37) ;
ii. la saillie conique (12) sur le bloc d'angle (10) est insérée dans une extrémité de la barre d'angle (30) sur toute sa hauteur et le boulon (37) est enfoncé dans le trou central (16) sur la saillie (12) sur le bloc d'angle (10) à l'aide d'un tournevis inséré à travers l'ouverture (45) sur la barre d'angle (30), jusqu'à ce que le joint (22) soit pressé dans la rainure (21) sur la face de base de forme carrée (14) ;
b. Assemblage d'une traverse (65) à une barre d'angle (30) ou à une traverse externe/interne (65) :
i. un insert de barre transversale (67) est placé entre l'extrémité de la barre transversale (65) et la barre d'angle (30) ou la barre transversale externe (65). Lorsqu'une barre transversale (65) est assemblée à d'autres éléments de cadre, c'est-à-dire un bloc d'extension de barre transversale (50), un bloc d'extension de barre transversale (80) ou une barre transversale interne (65), l'insert de barre transversale (67) n'est pas utilisé. entre l'extrémité de la barre transversale et cet élément de cadre.
ii. le boulon (72) dans le dispositif d'assemblage (70) à l'extrémité de la barre transversale (65) est enfoncé dans le trou taraudé correspondant (33a ou 66a) sur la surface longitudinale de la barre d'angle (30) ou de la barre transversale (65 ), tandis que la broche de guidage (73) est insérée dans un autre trou libre correspondant (33b ou 66b) sur la surface longitudinale de la barre d'angle (30) ou de la barre transversale (65), par un tournevis inséré à travers l'ouverture (69). sur la traverse (65) jusqu'à ce que le boulon (72) soit bien serré .
c. Assemblage d'un bloc d'extension de barre d'angle (50) à une barre d'angle (30) : l'une des saillies coniques (51) est insérée dans l'extrémité de la barre d'angle (30) sur toute sa hauteur puis le boulon (37) dans le L'ancrage de la barre d'angle (34) est enfoncé dans le trou central (53) de la saillie (51) du bloc d'extension de la barre d'angle (50) à l'aide d'un tournevis inséré à travers l'ouverture (45) de la barre d'angle (30), jusqu'à ce que le joint (22) est enfoncé dans la rainure (54) sur la face de base de forme carrée (56a). L'autre saillie (51) du bloc d'extension de barre d'angle (50) est insérée dans une extrémité d'une autre barre d'angle (30) et assemblée de manière similaire ;
d. Assemblage d'un bloc d'extension de barre d'angle (50) à une barre transversale (65) : la saillie rectangulaire effilée (52) est insérée dans l'extrémité de la barre transversale (65) sur toute sa hauteur ; le boulon (72) dans le dispositif d'assemblage (70) à l'extrémité de la barre transversale (65) est enfoncé dans l'un des trous taraudés (58) correspondants sur la saillie (52) pendant que la tige de guidage (73) est insérée dans le trou libre (59) de la saillie (52) du bloc d'extension de la barre d'angle (50), à l'aide d'un tournevis inséré à travers l'ouverture (69) de la barre transversale (65), jusqu'à ce que le joint (61) soit enfoncé dans la rainure (60) sur la face de base de forme rectangulaire (56b) ;
e. Assemblage d'un bloc d'extension de barre transversale (80) à une barre transversale (65) : les saillies coniques (81) du bloc d'extension de barre transversale (80) sont insérées dans l'extrémité de la barre transversale (65) sur toute sa hauteur ; le boulon (72) dans le dispositif d'assemblage (70) à l'extrémité de la barre transversale (65) est enfoncé dans le trou taraudé (81b) sur la saillie (81) tandis que la goupille de guidage (73) est insérée dans le trou libre trou (81c) sur la saillie (81) du bloc d'extension de la barre transversale (80), par un tournevis inséré à travers l'ouverture (69) de la barre transversale (65), jusqu'à ce que le joint (61) soit enfoncé dans la rainure ( 85) sur la face de base de forme rectangulaire (82) ;
f. Assemblage d'une barre transversale (65) à un bloc d'extension de barre transversale (80) à l'aide de ses surfaces planes (83a et 83c) : le boulon (72) dans le dispositif d'assemblage (70) à l'extrémité de la barre transversale (65) est entraîné dans l'un des trous taraudés correspondants (90) tandis que la broche de guidage (73) est insérée dans le trou libre (91) sur la surface plane (83a ou 83c) du bloc d'extension de barre transversale (80), à l'aide d'un tournevis. inséré à travers l'ouverture (69) sur la barre transversale (65), jusqu'à ce que la barre transversale (65) entre en contact complet avec le bloc d'extension de barre transversale (80) ;
g. Assemblage d'une ou deux barres transversales sur la surface plane interne (86) du bloc d'extension de barre transversale (80) : le boulon (72) dans le dispositif d'assemblage (70) à l'extrémité de la barre transversale (65) est enfoncé dans une position sélectionnée. trou taraudé (88) tandis que la broche de guidage (73) est insérée dans le trou libre sélectionné (87) sur la surface plane interne (86) du bloc d'extension de barre transversale (80), par un tournevis inséré à travers l'ouverture (69 ) sur la barre transversale (65), jusqu'à ce que la barre transversale (65) entre en contact complet avec la surface plane (86) du bloc d'extension de barre transversale (80). De même, une autre barre transversale (65) peut être assemblée sur la même surface plane (86) du bloc d'extension de barre transversale (80) selon les exigences de conception de la structure de cadre modulaire.
